(19) Europäisches Patentamt / European Patent Office / Office européen des brevets

(11) EP 2 977 187 A1

(12) EUROPEAN PATENT APPLICATION
published in accordance with Art. 153(4) EPC

(43) Date of publication:
27.01.2016 Bulletin 2016/04

(51) Int Cl.:
B29C 65/34 (2006.01)    B29C 65/08 (2006.01)

(21) Application number: 14768398.1

(22) Date of filing: 24.03.2014

(86) International application number:
PCT/JP2014/058079

(87) International publication number:
WO 2014/148643 (25.09.2014 Gazette 2014/39)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 22.03.2013   JP 2013060332
22.03.2013   JP 2013060333
22.03.2013   JP 2013060334

(71) Applicants:
• Origin Electric Company, Limited
Tokyo 171-8555 (JP)
• Teijin Limited
Osaka-shi, Osaka 541-0054 (JP)

(72) Inventors:
• MIZUTANI Naozumi
Tokyo 171-8555 (JP)

• KADOYA Yasuo
Tokyo 171-8555 (JP)
• NISHIMURA Hironobu
Tokyo 171-8555 (JP)
• ARAI Koji
Tokyo 171-8555 (JP)
• KOMATSU Akio
Tokyo 171-8555 (JP)
• KATO Takumi
Matsuyama-shi
Ehime 791-8044 (JP)
• SUZUKI Shuhei
Matsuyama-shi
Ehime 791-8044 (JP)

(74) Representative: Wallin, Nicholas James
Withers & Rogers LLP
4 More London Riverside
London SE1 2AU (GB)

(54) **COMPOSITE-MATERIAL JOINING DEVICE, METHOD FOR PRODUCING JOINED BODY, AND JOINED BODY**

(57) In order to address the problem of stably joining two or more composite materials including a carbon fiber and a thermoplastic resin at a target joining position, the present invention joins two or more composite materials (11a, 11b) to one another by: contacting the joining surfaces of the two or more composite materials (11a, 11b) which include a carbon fiber and a thermoplastic resin; and subjecting the target joining position to the conduction of a current for joining the two or more composite materials (11a, 11b) to one another with Joule heat, while a vibration generation device (17) imparts vibrations to the two or more composite materials (11a, 11b) to which pressure is being applied by a pressurizing device (13).

FIG. 1

EP 2 977 187 A1

## Description

TECHNICAL FIELD

The present invention relates to a composite material joining device configured to join a carbon fiber-reinforced plastics to each other, a method for manufacturing a joined body, and a joined body.

BACKGROUND ART

A thermoplastic resin reinforced by carbon fibers is expected to be used in an aviation field, an automobile field and the like.

As one of methods for joining the thermoplastic resin, there is a method of performing the joining by allowing a joining current to flow between two thermoplastic resins reinforced by carbon fibers while pressing them, and partially melting and welding joining surfaces of these thermoplastic resins and the vicinities thereof (see Patent Literature 1, for example).

On the other hand, as a thermoplastic resin reinforced by carbon fibers, there is a thermoplastic resin in which the carbon fibers are dispersed at random (see Patent Literature 2).

[Prior Art Document]

[Patent Document]

PTL 1: Japanese Patent Laid-Open No. 2012-187903
PTL 2: WO2012-137985

DISCLOSURE OF INVENTION

Problem to be solved by the Invention

In joining the thermoplastic resin reinforced by carbon fibers, an electric current is made to flow through the carbon fibers contained in the resin and the thermoplastic resin is melted by heat generation by Joule heat, and thus, heat generation might occur to cause melting at a position different from a target joining position due to a content of the carbon fibers, a dispersed state and the like. Thus, for example, as in Patent Literature 2, when the thermoplastic resin in which the carbon fibers are dispersed is to be joined by using a conventional welding method as in Patent Literature 1, it is difficult to stably join the joining position at the target position. If the electric current flows and melting occurs at a position different from the target joining position, there are problems that joining strength lowers or esthetic appearance is deteriorated in a manufacture in which the appearance is important.

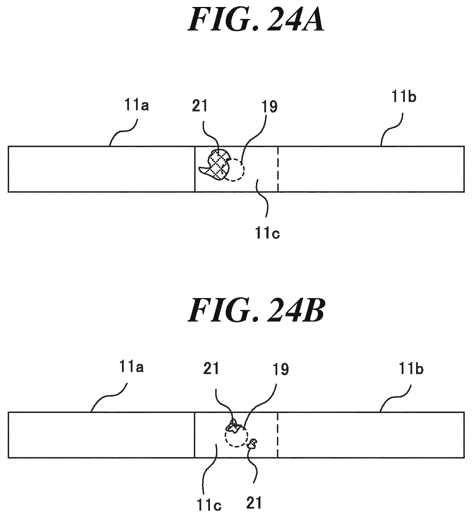

Fig.24A and Fig.24B are plan views illustrating an example of the joining surfaces of two thermoplastic resins reinforced by carbon fibers in the conventional welding method. Fig.24A is a plan view of an example in which the two thermoplastic resins reinforced by the carbon fibers are joined at a position other than immediately below a center of an electrode. Fig.24B is a plan view of an example in which a joining area of the two thermoplastic resins reinforced by the carbon fibers is small and the joining strength is weak.

Welding of the thermoplastic resins 11a and 11b reinforced by the carbon fibers is performed by arranging an electrode at a target joining position 19 of the joining surface 11c where the two thermoplastic resins 11a and 11b reinforced by the carbon fibers are overlapped, partially melting the joining surface 11c and its vicinity of the thermoplastic resin reinforced by the carbon fibers by applying a voltage, and then stopping current feeding to cool the joining portion of the thermoplastic resin reinforced by the carbon fibers. As illustrated in Fig.24A, a joining portion 21 might be at a position shifted in an upper left direction from immediately below the center of the electrode. Or as illustrated in Fig.24B, the joining portions 21 might be formed in plural in a scattered manner and even if one of the joining portions 21 is located at a position immediately below the center of the electrode, a joining area of the joining portion 21 is smaller, and the joining strength might be weaker. As described above, variation in the joined state is large in the conventional ways.

Moreover, when the thermoplastic resin in which the carbon fibers are dispersed at random as illustrated in Patent Literature 2 is to be joined by using the welding method in Patent Literature 1, the joining area might be increased in order to improve its joining strength.

In order to increase the joining area of the two thermoplastic resins reinforced by the carbon fibers, it can be achieved by prolonging current feeding time while pressing the two thermoplastic resins reinforced by the carbon fibers.

This is because, by prolonging the current feeding time to the carbon fibers by voltage application and by causing the carbon fibers to generate more heat to melt the thermoplastic resins, the joining area can be increased by pressurization.

However, it was found that the joining strength cannot be improved even by prolonging the current feeding time while pressing the two thermoplastic resins reinforced by the carbon fibers to increase the joining area in some cases. Rather, it was found that the joining strength worsened to the contrary.

On the other hand, as a method of observing the melted state, there is a method of monitoring a temperature of a joining interface as in Patent Literature 1, for example. In this method, a temperature of the joining interface of the thermoplastic resin as a joined body sandwiched by two electrodes is observed by using thermography from a side surface of the thermoplastic resin and thus, if welding occurs at a spot far from the electrode, it is difficult to specify a range of welding with what radius around the electrode. Moreover, depending on the shape and the size of an article to be joined and conditions of a facility using the joining device and the like, observation of the temperature of the joining interface is limited, which cannot be considered practical.

Here, in the explanation below, a case in which the thermoplastic resin reinforced by the carbon fibers is a composite material which contains a thermoplastic resin and discontinuous carbon fibers and in which the discontinuous carbon fibers are dispersed (hereinafter referred to as a composite material) will be explained.

The present invention has an object to obtain a composite material joining device which can stably join two or more composite materials containing the carbon fibers and the thermoplastic resin at a target joining position, a method for joining, and a joined body.

The present invention has another object to provide a composite material joining device which can obtain tensile strength according to a joining area when joining is made by applying vibration while pressing two or more composite materials containing the carbon fibers and the thermoplastic resin and by feeding an electric current, a method for manufacturing a joined body, and a joined body.

The present invention has still another object to provide a composite material joining device which can easily determine acceptability of a joined spot of two or more composite materials containing the carbon fibers and the thermoplastic resin, a method for manufacturing a joined body, and a joined body.

Means for solving the problem

The inventors have made a keen study in order to solve the above-described problems and surprisingly found that by applying vibration to a target joining position before feeding an electric current in a state in which the composite materials are brought into contact and pressure is applied on the composite materials and by joining composite materials by Joule heat by current feeding at the same time or after that, favorable joining strength was stably obtained. Detailed factors for such favorable result are unknown, but it is presumed that by applying vibration before current feeding, contact resistance at a contact portion which is a target joining position lowers, and current feeding is made selectively at the target joining position, whereby the joining strength becomes stable.

A composite material joining device according to aspect 1 of the present invention composes a pressing device configured to apply pressure on a target joining position of two or more composite materials containing carbon fibers and a thermoplastic resin, in a state in which a joining surfaces of the two or more composite materials are in contact; a vibration generating device configured to apply vibration to the target joining position in a state in which the joining surfaces of the two or more composite materials are in contact; and a power supply for feeding an electric current for joining the two or more composite materials by Joule heat to the target joining position at the same time when or in a state in which vibration is applied by the vibration generating device to the two or more composite materials pressed by the pressing device.

By configuring as above, the electric current can be better conducted through the target joining position of the two or more composite materials to which the vibration is applied, the thermoplastic resin at the target joining position is melted, and the composite materials can be stably joined at the target joining position.

A composite material joining device according to aspect 2 of the present invention is the device according to aspect 1 of the present invention, wherein the vibration generating device applies vibration to the joining surfaces so that the joining surfaces of the two or more composite materials are heated to a temperature equal to or lower than a melting point of the thermoplastic resin.

By configuring as above, since the vibration is applied to the joining surfaces such that the joining surfaces of the two or more composite materials are heated to the temperature equal to or lower than the melting point of the thermoplastic resin, the thermoplastic resins are prevented from being melted at a spot different from the target joining position by energy of the vibration and from being joined to each other, while the thermoplastic resins can be joined at the target joining position.

A composite-material joining device according to aspect 3 of the present invention is the device according to aspect 1 or 2 of the present invention, the vibration generating device applies vibration in a direction perpendicular to the joining surfaces of the two or more composite materials.

By configuring as above, by applying the vibration in the direction perpendicular to the joining surfaces of the two composite materials, the vibration energy can be transmitted directly in a concentrated manner toward a thickness direction of the composite material, the joining surfaces of the target joining position of the two or more composite materials can be made to generate heat efficiently, and unintended spread of joining in a horizontal direction out of the target joining position can be suppressed.

A composite-material joining device according to aspect 4 of the present invention is the device according to any one of aspects 1 to 3 of the present invention, wherein a vibration frequency of the vibration generating device is several kHz to several 100 kHz.

By configuring as above, by applying the vibration at a predetermined frequency, a joining surface which becomes a target joining position of the composite material can be made to generate heat efficiently.

A composite-material joining device according to aspect 5 of the present invention is the device according to any one of aspects 1 to 4 of the present invention, wherein a controller configured to control the pressing device is provided so that, when the two or more composite materials are melted together and welded, the pressure applied is made lower than a predetermined pressure.

By configuring as above, when the vibration is applied and the electric current is fed while the target joining position of the two or more composite materials is pressed by the predetermined pressure, and the two or more composite materials are melted together and welded, the pressure applied is made lower than the predetermined pressure and thus, pushing-out and diffusion of the melted thermoplastic resin to an outside of the target joining position can be suppressed. Therefore, at the target joining position, deterioration of tensile strength can be prevented.

A composite-material joining device according to aspect 6 of the present invention is the device according to aspect 5 of the present invention, wherein the controller controls the pressing device so that the pressure applied is made lower than the predetermined pressure when a temperature of the thermoplastic resin on the joining surfaces of the two or more composite materials reaches a melting point.

By configuring as above, since the pressure can be weakened immediately before the two or more composite materials are melted and welded, diffusion of the melted thermoplastic resin can be reliably prevented.

A composite-material joining device according to aspect 7 of the present invention is the device according to any one of aspects 1 to 6 of the present invention, wherein a temperature distribution measuring device configured to measure temperature distribution on surfaces of the target joining position where pressure is applied by the pressing device and its periphery and a determining device configured to determine whether or not the data obtained by the temperature distribution measuring device is within the same range as that of temperature data serving as a reference stored in advance.

By configuring as above, when two or more composite materials are to be joined by Joule heat, an image at the target joining position is obtained by the temperature distribution measuring device and thus, acceptability of the joining spot of the two or more composite materials can be easily determined. That is, the acceptability of the joining can be easily determined without peeling off for inspection after the two or more composite materials are joined. Particularly, this is effective for joining of composite materials in which the carbon fibers are dispersed at random in the thermoplastic resin.

A method for manufacturing a joined body according to aspect 8 of the present invention, is a method wherein a target joining position of the two or more composite materials is pressed in a state in which the joining surfaces of the two or more composite materials containing the carbon fibers and the thermoplastic resin are in contact, vibration is applied to the target joining position in a state in which the joining surfaces of the two or more composite materials are in contact, an electric current for joining the two or more composite materials by Joule heat is fed to the target joining position in a state in which vibration is applied to the pressed two or more composite materials, and the two or more composite materials are joined so as to manufacture the joined body.

By configured as above, the electric current can be better conducted through the target joining position of the two or more composite materials to which vibration has been applied, the thermoplastic resin at the target joining position is melted and the composite materials can be stably joined at the target joining position.

A method for manufacturing a joined body according to aspect 9 of the present invention is the method according to aspect 8 of the present invention, wherein the vibration applied to the target joining position of the two or more composite materials is vibration for heating the joining surfaces of the two or more composite materials to a temperature equal to or lower than a melting point of the thermoplastic resin.

By configuring as above, since the vibration such that the joining surfaces of the two or more composite materials are heated to the temperature equal to or lower than the melting point of the thermoplastic resin are applied to the joining surfaces, the thermoplastic resin is prevented from being melted at a spot different from the target joining position by the vibration energy, causing the thermoplastic resins to join each other, while the thermoplastic resin can be joined at the target joining position.

A method for manufacturing a joined body according to aspect 10 of the present invention is the method according to the aspect 8 or 9 of the present invention, wherein the vibration applied to the target joining position of the two or more composite materials is vibration in a direction perpendicular to the joining surface of the two or more composite materials.

By configuring as above, by applying the vibration in the direction perpendicular to the joining surfaces of the two composite materials, vibration energy can be transmitted directly in a concentrated manner toward a thickness direction of the composite materials, heat can be generated efficiently on the joining surfaces of the two or more composite materials at the target joining position, and unintended spread of joining in a horizontal direction out of the target joining position can be suppressed.

A method for manufacturing a joined body according to aspect 11 of the present invention is the method according to any one of aspects 8 to 10 of the present invention, wherein a vibration frequency of the vibration applied to the target joining position of the two or more composite materials is several kHz to several 100 kHz.

By configuring as above, by applying the vibration at a predetermined frequency, heat can be generated efficiently on the joining surfaces of the composite materials at the target joining position.

A method for manufacturing a joined body according to aspect 12 of the present invention is the method according to any one of aspects 8 to 11 of the present invention, wherein the carbon fibers are arranged by being dispersed at random in an in-plane direction of the composite material.

By configuring as above, an electric current can be stably conducted in the thickness direction of the composite material.

A method for manufacturing a joined body according to aspect 13 of the present invention is the method according to any one of aspects 8 to 12 of the present invention, wherein an average fiber length of the carbon fibers is 1 to 100 mm.

By configuring as above, an electric current can be stably conducted in the thickness direction of the composite material.

A method for manufacturing a joined body according to aspect 14 of the present invention is the method according to any one of aspects 8 to 13 of the present invention, wherein when the two or more composite materials are melted together and brought into a welded state, the two or more composite materials are joined by pressing with a pressure lower than the predetermined pressure.

By configuring as above, when the vibration is applied and the electric current is conducted while the target joining position of the two or more composite materials is pressed by a predetermined pressure, and the two or more composite materials are melted together and brought into the welded state, since the pressing is performed with a pressure lower than the predetermined pressure, pushing-out to the outside of the target joining position and diffusion of the melted thermoplastic resin can be suppressed. Therefore, lowering of the tensile strength can be prevented at the target joining position.

A method for manufacturing a joined body according to aspect 15 of the present invention is the method according to aspect 14 of the present invention, wherein pressing with a pressure lower than the predetermined pressure is performed when the temperature of the thermoplastic resin of the joining surfaces of the two or more composite materials reaches a melting point.

By configuring as above, since the pressure can be lowered immediately before the two or more composite materials are melted and welded, diffusion of the melted thermoplastic resin can be reliably prevented.

A method for manufacturing a joined body according to aspect 16 of the present invention is the method wherein using the composite-material joining device according to aspect 7, the method determines, with a determining device, whether data relating to temperature distribution on a surface of the composite material obtained by the temperature distribution measuring device is in the same range as that of the temperature data serving as a reference stored in advance in a storage device, and evaluates joining of the composite material as acceptable if it is in the same range, while evaluating joining of the composite material as defective if it is not in the same range.

By configuring as above, the joining of the composite materials can be evaluated efficiently.

Thus, according to the present invention, by using the above-described manufacturing device of a composite material or the above-described method for manufacturing a joined body, a novel joined body as below can be obtained.

A joined body according to aspect 17 of the present invention is obtained by the method for manufacturing a joined body according to any one of aspects 8 to 16 of the present invention.

By configuring as above, since the two or more composite materials can be stably joined at the target joining position, a joined body having predetermined joining strength and further having favorable esthetic appearance of a joining portion can be obtained.

A joined body according to aspect 18 of the present invention is the joined body obtained by joining two or more composite materials containing carbon fibers and a thermoplastic resin by Joule heat at the same time when or in a state in which vibration is applied in a state in which the joining surfaces of the two or more composite materials are in contact.

By configuring as above, an electric current can be better conducted at the target joining position of the two or more composite materials to which the vibration has been applied, the thermoplastic resin at the target joining position is melted by the Joule heat, and a substantially circular welding part is formed on the joining surface of the composite material at the target joining position. As a result, a molding with excellent joining strength and more excellent designability of the joining portion than the joining by conventional ultrasonic welding in joining between planes is provided.

A joined body according to aspect 19 of the present invention is the joined body according to aspect 18 of the present invention, wherein the vibration is vibration in a direction perpendicular to the joining surfaces of the composite material.

By configuring as above, by applying the vibration in the direction perpendicular to the joining surfaces of the two composite materials, vibration energy can be transmitted directly in a concentrated manner toward a thickness direction of the composite materials. As a result, a molding with excellent joining strength is provided.

A joined body according to aspect 20 of the present invention is the joined body according to aspect 18 or 19 of the present invention, wherein a frequency of the vibration is several kHz to several 100 kHz.

By configuring as above, by applying the vibration at a predetermined frequency, heat can be generated efficiently on the joining surface of the composite materials at the target joining position, and as a result, a joined body with favorable joining strength and designability is provided.

A joined body according to aspect 21 of the present invention is the joined body according to any one of aspects 18 to 20 of the present invention, wherein an average fiber length of the carbon fibers is 1 to 100 mm.

By configuring as above, an electric current can be stably fed in the thickness direction of the composite material, and a joined body with favorable joining strength and designability is provided.

A joined body according to aspect 22 of the present invention is the joined body according to any one of aspects 18 to 21 of the present invention, wherein a content of the carbon fibers in the composite materials is 10 to 90% in volume percent (Vf).

By configuring as above, from the viewpoint of joining strength and designability, and moreover, from the viewpoint of current conduction and heat generation, a joined body with excellent balance between mechanical strength and productivity is provided.

EFFECT OF THE INVENTION

In a state in which the composite materials are brought into contact and pressed, vibration is applied to the target joining position before an electric current is fed, and then, by joining the composite materials by Joule heat by current feeding, favorable joining strength can be obtained stably.

Moreover, the vibration is applied and the electric current is fed while the target joining position of two or more composite materials is pressed by a predetermined pressure, and when the two or more composite materials are melted together and brought into the welded state, pressing is performed with a pressure lower than the predetermined pressure and thus, diffusion of the melted thermoplastic resin which pushed-out to the outside of the target joining position can be suppressed. Therefore, lowering of the tensile strength can be prevented at the target joining position.

Moreover, in joining the two or more composite materials by Joule heat, data relating to the temperature distribution of the target joining position is obtained by the temperature distribution measuring device and thus, acceptability of the joining spot of the two or more composite materials can be easily determined. That is, acceptability of the joining can be easily determined without peeling off for inspection after the two or more composite materials are joined. Particularly, this is effective for joining of composite materials in which the carbon fibers are dispersed at random in the thermoplastic resin.

BRIEF DESCRIPTION OF DRAWINGS

Fig. 1 is a configuration view of an example of a composite-material joining device according to a first embodiment of the present invention.

Fig. 2 is a time chart illustrating an example of operation timing of the composite-material joining device according to the first embodiment of the present invention.

Fig. 3 is a time chart illustrating another example of operation timing of the composite-material joining device according to the first embodiment of the present invention.

Fig. 4 is a flowchart illustrating an example of a process of a method for manufacturing a joined body according to the first embodiment of the present invention.

Fig. 5 is a plan view illustrating an example of joining surface of two composite materials in the first embodiment of the present invention.

Fig. 6 is a configuration view of another example of the composite material joining device according to the first embodiment of the present invention.

Fig. 7 is a configuration view of still another example of the composite material joining device according to the first embodiment of the present invention.

Fig. 8 is a time chart illustrating an example of operation timing of a composite material joining device according to a second embodiment of the present invention.

Fig. 9 is a flowchart illustrating an example of a process of a method for manufacturing a joined body according to the second embodiment of the present invention.

Fig. 10 is a graph illustrating an example of a relationship between tensile strength and a joining area of joining portion of two composite materials in the second embodiment of the present invention.

Fig. 11 is a configuration view of an example of a composite material joining device according to a third embodiment of the present invention.

Fig. 12 is a time chart illustrating an example of operation timing of the composite material joining device according to the third embodiment of the present invention.

Fig. 13 is a flowchart illustrating an example of a process of a method for manufacturing a joined body according to the third embodiment of the present invention.

Fig. 14 is a configuration view of another example of the composite material joining device according to the third embodiment of the present invention.

Fig. 15 is a configuration view of still another example of the composite material joining device according to the third embodiment of the present invention.

Fig. 16 is a configuration view of an example of a composite material joining device according to a fourth embodiment of the present invention.

Fig. 17 is a perspective view illustrating an example of an image when joining was performed favorably, where the image was obtained by a temperature distribution measuring device during joining of the composite materials.

Fig. 18A is an enlarged photo of a surface of a joining spot of the composite material 11a when joining was performed favorably.

Fig. 18B is an enlarged photo of a surface of a joining spot of the two composite material 11b when joining was performed favorably.

Fig. 19 is a perspective view illustrating an example of an image when joining was performed defectively, where the image was obtained by a temperature distribution measuring device during joining of the composite materials.

Fig. 20A is an enlarged photo of the surface of the joining spot of composite material 11a when joining was performed defectively.

Fig. 20B is an enlarged photo of the surface of the joining spot of composite material 11b when joining was performed defectively.

Fig. 21 is a configuration view of another example of a composite material joining device according to the fourth embodiment of the present invention.

Fig. 22 is a configuration view of still another example of a composite material joining device according to the fourth embodiment of the present invention.

Fig. 23 is a flowchart illustrating an example of a process of a method for evaluating joining of the composite materials according to the fourth embodiment of the present invention.

Fig.24A is a plan view illustrating an example of the joining surface of the two composite materials by a conventional welding method.

Fig.24B is a plan view illustrating another example of the joining surface of the two composite materials by a conventional welding method.

## BEST MODE FOR CARRYING OUT THE INVENTION

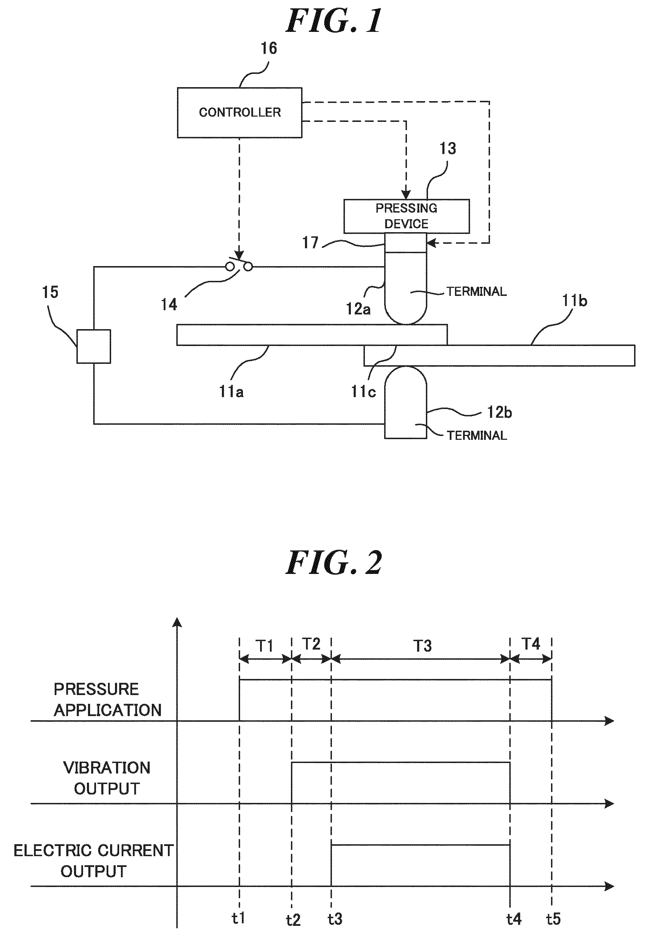

The embodiments of the present invention will be explained. Fig. 1 is a configuration view of an example of a composite-material joining device according to a first embodiment of the present invention. First, composite materials 11a and 11b used in the first embodiment of the present invention will be explained.

The composite material used in the present invention is a composite material containing discontinuous carbon fibers with a thermoplastic resin as matrix. By containing the discontinuous carbon fibers, electric conductivity can be made to emerge in the thermoplastic resin which is usually nonconductive.

The carbon fibers are represented by PAN-based carbon fibers, pitch-based carbon fibers and the like. The PAN-based and the pitch-based are selected depending on an application, but if higher strength is required, the PAN-based carbon fibers are used in general.

The "discontinuous carbon fibers" refers to those having an average fiber length of 0.1 to 300 mm in carbon fibers. The fibers other than the "discontinuous carbon fibers" are called "continuous fibers".

The average fiber length of the discontinuous fibers is preferably 1 to 100 mm, more preferably 1 mm or longer and 80 mm or shorter and still more preferably 1 mm or longer and 50 mm or shorter.

Regarding the average fiber length, the lengths of randomly extracted 100 carbon fibers are measured and recorded to the unit of 1 mm by a caliper and a loupe, and the average fiber length (La) can be acquired by the following equation from the lengths of all the measured carbon fibers (Li, here i = an integer from 1 to 100):

$$La = \Sigma Li/100$$

A content of the carbon fibers of the composite material in the present invention is preferably 10 to 90% in volume percent (Vf). With Vf at 10% or more, an electric current can be stably conducted in the composite material. Moreover, with Vf at 90% or less, a resistance value is ensured, and Joule heat can be obtained. In order to obtain a stable joined body from the viewpoint of current conducting and heat generation, Vf is more preferably 20 to 55% and further more preferably 20 to 50%.

Orientation of the carbon fibers in the composite material in the present invention is preferably at random in a direction in which the electric current flows, that is, the orientation is preferably at random basically in a direction (in-plane direction) in parallel with the perpendicular direction to a current feeding direction. An electric current can be stably conducted in the thickness direction in the composite material in which the discontinuous carbon fibers are arranged at random.

Preferably, the carbon fibers are uniformly randomly oriented because they can be stably bonded when they have a constant electric resistance value. Here, as the composite material in which the discontinuous carbon fibers are arranged at random, the composite material in which the discontinuous carbon fibers with the average fiber length of 1 to 100 mm are arranged so as to overlap each other in a plane and the carbon fibers are oriented substantially at two-dimensionally random with a fiber areal weight of 25 to 3000 g/m$^2$ can be cited, for example. The discontinuous carbon fibers may be present in a state of single fibers, carbon fiber bundles or single fibers and fiber bundles mixed with each other.

The matrix resin in the composite material is a thermoplastic resin. As the thermoplastic resin, at least one kind selected from a group consisting of polyamide, polycarbonate, polyoxymethylene, polyphenylene sulfide, polyphenylene ether, modified polyphenylene ether, polyethylene terephthalate, polybutylene terephthalate, polyethylene naphthalate, polypropylene, polystyrene, polymethyl metacrylate, AS resin, and ABS resin is preferable. The thermoplastic resin is not particularly limited as long as it can be melted by Joule heat and can be selected in accordance with various applications.

By adjusting an amount and a kind of the discontinuous carbon fibers so that a desired electric resistance value can be obtained, welding can be made regardless of the kind of the thermoplastic resin. A weight ratio of the discontinuous carbon fibers contained in the joining portion of the composite material is preferably 10 to 1000 weight parts of the discontinuous carbon fibers with respect to 100 weight parts of the thermoplastic resin. More preferably, the ratio of the discontinuous carbon fibers is 10 to 300 weight parts with respect to 100 weight parts of the thermoplastic resin or further preferably it is 10 to 150 weight parts. However, the weight ratio of the discontinuous carbon fibers contained in the composite material other than the joining portion is not limited by that.

Moreover, in the composite material, various fillers and additives other than the discontinuous carbon fibers may be contained within a range not spoiling the object of the present invention. As the additives, a flame retardant, a heat stabilizer, an UV absorber, a nucleating agent, a plasticizer and the like can be cited, for example, but not limited to them.

The shape of the composite material used in the present invention is not particularly limited, but a plate shape having a thickness of 0.2 to 20 mm, a molding with a circular or polygonal sectional shape, and a hollow body can be cited, for example.

A method for manufacturing the composite material is not particularly limited, but the composite material is preferably manufactured by compressing/molding a plate-shaped molding base material having the discontinuous carbon fibers and the thermoplastic resin. Methods for manufacturing this molding base material include, for example, (1) a dry method in which carbon fibers which may be present in a state of carbon fiber bundles are cut to a predetermined length and they are opened by air or a carding machine while they are mixed with a powdery or a fibrous thermoplastic resin, and (2) a papermaking method in which carbon fibers which may be present in a state of carbon fiber bundles are cut into a predetermined length, and the carbon fibers thus cut and fibers formed by a thermoplastic resin are opened and mixed in a dispersing liquid and subjected to papermaking on a support body with holes.

An example is shown below. A carbon fiber bundle (Tenax by Toho Tenax Co., Ltd. (registered trademark) STS4024K, average fiber diameter of 7 µm) was cut so as to have an average fiber length of 20 mm and opened by blowing air and dispersed and arranged at random on a plane so as to have an average fiber areal weight of 980 g/m$^2$ of carbon fibers. In opening, a powdery thermoplastic resin as a matrix was added and mixed with the carbon fibers. For the matrix, Unitika Nylon 6 by Unitika Ltd. was used, and the content ratio of the carbon fibers was set to 45% on the mass basis and 35% on the volume basis. The obtained molding base material was set on a mold and held for 10 minutes at a temperature of 250°C under a pressure of 10 MPa. After that, the mold was cooled so as to obtain the composite material (size: 400 mm × 400 mm × 2.5 mm) containing carbon fiber bundles.

The obtained composite material was cut to an appropriate size, and in a state in which the joining surfaces 11c of such two composite materials 11a and 11b are in contact, terminals 12a and 12b are arranged to sandwich the two composite materials 11a and 11b at the target joining position of the two composite materials 11a and 11b. Here, a vibration generating device 17 is mounted on the terminal 12a. Moreover, a pressing device 13 is provided, and the pressing device 13 pushes to press the two composite materials 11a and 11b through the vibration generating device 17 and the terminal 12a. Moreover, the pressing device 13 presses the two composite materials 11a and 11b through the terminals 12a and 12b and increases a joining area by pushing to spread the melted thermoplastic resin and has the pressing controlled by a controller 16.

The joining surface refers to a surface where the two composite materials 11a and 11b are joined by welding and is assumed to include not only a part of the surface in contact when the two composite materials 11a and 11b are overlapped with each other but also the entire surface in contact.

Fig. 1 illustrates an example in which one pressing device 13 is provided on the terminal 12a but it may be provided also on the terminal 12b side. That is, the pressing devices 13 may be respectively disposed on both the terminal 12a side and the terminal 12b side to allow the terminals 12a and 12b to press the materials from both sides.

The terminals 12a and 12b are connected to a power supply 15 through a switch 14, and while the switch 14 is turned on, a voltage of the power supply 15 is applied to the target joining position of the two composite materials 11a and 11b, and an electric current is fed. A power supply with a variable voltage is used for the power supply 15 so that the voltage to be applied to the target joining position of the two composite materials 11a and 11b can be changed by the controller 16 as necessary. The power supply may be either of a DC power supply and an AC power supply, but if heat generation is to be obtained efficiently, the DC power supply is preferable. The switch 14 is operated to be turned on/off by the controller 16. Moreover, the pressing device 13 is to press the two composite materials 11a and 11b through the terminal 12a, and pressing control is performed by the controller 16.

The vibration generating device 17 is to apply vibration to the terminal 12a and consequently to apply vibration to the target vibration position of the two composite materials 11a and 11b. It may be a vibrator which mechanically applies vibration, an ultrasonic vibrator which applies vibration in ultrasonic wave or the like. By applying vibration to the joining surface 11c of the two composite materials 11a and 11b, the electric current can be better conducted through the target joining position of the joining surfaces of the two composite materials, whereby the thermoplastic resin can be melted at the portion and can be stably joined.

Details of this action have not been made clear, but it is presumed that joining may be performed not only by current feeding but also by using vibration. That is, the contact portion (joining surface) of the thermoplastic resin to which vibration is applied generates heat and is softened, whereby the contact resistance at that contact portion is lowered. Then, the electric current flowing through the joining surface thereafter can be better conducted through the previously softened portion, whereby the joining position is made stable.

After the vibration is applied, by current feeding, the thermoplastic resin is made to generate heat by Joule heat, whereby the thermoplastic resin is melted and joined. At this time, the carbon fibers dispersed in the thermoplastic resin promote heat generation.

Current fed after the vibration is applied causes the thermoplastic resin to generate heat by Joule heat, whereby the thermoplastic resin is melted and joined. At this time, the carbon fibers dispersed in the thermoplastic resin promote heat generation.

Here, a vibration direction by the vibration generating device 17 may be either direction of a horizontal direction (lateral direction) or a perpendicular direction (vertical direction) with respect to the joining surface 11c of the two composite materials 11a and 11b, but the vibration in the perpendicular direction is preferable. This is because, in the case of the vibration in the perpendicular direction, vibration energy can be transmitted directly in a concentrated manner toward the thickness direction of the composite material. Therefore, the joining surface 11c at the target joining position of the two composite materials 11a and 11b can efficiently generate heat as described above, while unintended spread of the joining in the horizontal direction deviated from the target joining position can be suppressed.

The vibration generating device 17 is controlled by the controller 16. In Fig. 1, the example in which the vibration generating device 17 is mounted on the terminal 12a is illustrated, but the vibration generating device 17 may be mounted on the terminal 12b.

The controller 16 controls the vibration generating device 17, the pressing device 13, and the switch 14 so that the electric current can be fed to the target joining position while the two composite materials 11a and 11b are pressed in a state in which the vibration is applied to the target joining position of the two composite materials 11a and 11b and the vibration is continuously applied.

Fig. 2 is a time chart illustrating an example of operation timing of the composite-material joining device according to the first embodiment of the present invention and illustrates the timing of control by the controller 16. First, the controller 16 starts the pressing device 13 at time t1 in a state in which the joining surfaces 11c of the two composite materials 11a and 11b are in contact. Then, for a certain period of time T1, a pressure is applied in advance to the target joining position of the two composite materials 11a and 11b

Then, at time t2 after the certain period of time T1 has elapsed since the time t1, the controller 16 starts up the vibration generating device 17 and turns on the switch 14 at time t3 after a predetermined period of time T2 has elapsed. As a result, in the state in which the two composite materials 11a and 11b are pressed, while the vibration is applied in advance by the vibration generating device 17, the electric current is fed to the target joining position of the two composite materials 11a and 11b. The current conducting through the joining surface 11c which is the target joining position of the two composite materials 11a and 11b is facilitated by the vibration, and the thermoplastic resin is melted by heat generation by current fed thereafter and is subjected to resistance welding. Then, at time t4 after a predetermined period of time T3 has elapsed since the time t3, application of the vibration and current feeding are stopped, pressing is stopped at time t5 after a predetermined period of time T4 has elapsed since the time t4, and joining is finished. The predetermined period of time T3, time required for joining of the two composite materials 11a and 11b, is determined in advance.

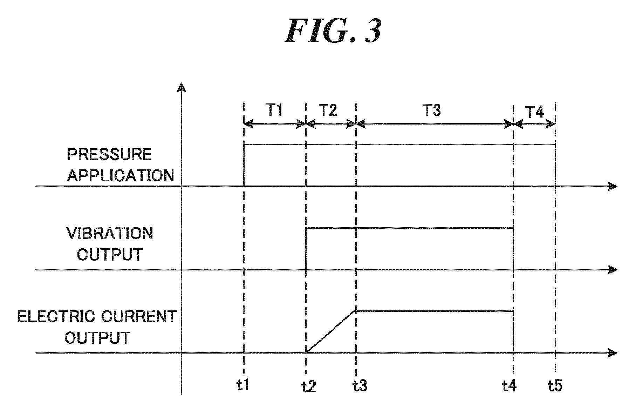

In the above explanation, the vibration is applied in advance and then, the electric current at a predetermined value is fed, but as illustrated in Fig. 3, the application of vibration and current feeding may be started at the same timing so that the electric current is started up so as to reach a predetermined value with a gentle gradient. As a result, delay time is generated until the electric current reaches the predetermined value and thus, it becomes equivalent to application of the vibration prior to the current feeding.

Intensity of the vibration is preferably such that the thermoplastic resin constituting the composite materials 11a and 11b is heated by the vibration energy to such a degree that its melting point is not reached. A vibration frequency is varied depending on melting points and thicknesses of the composite materials 11a and 11b, a content of the carbon fibers and the like and a single value cannot be determined, but it is several kHz to several 100 kHz. It is preferably an ultrasonic vibration the frequency of which is 1 to 200 kHz, for example, preferably 10 to 100 kHz, or more preferably 15 to 50 kHz.

If the thermoplastic resin is heated to a melting point or higher, welding occurs, and contact resistance on the joining interface becomes too small and thus, it is presumed that efficient heat generation on the interface becomes difficult. In this point, in the first embodiment of the present invention, the temperature of the thermoplastic resin is heated to such a degree that the melting point is not reached, and by current feeding after that, the thermoplastic resin can be melted at the target joining position and stably joined.

Moreover, application of the vibration may be stopped immediately before or immediately after start of current feeding but it is preferable that application of the vibration and current feeding are performed in parallel even during current feeding until the thermoplastic resin is melted by the current feeding. By providing a period in which the current feeding and the vibration are both performed, joining strength can be improved as compared with a case in which the vibration is stopped before current feeding and the thermoplastic resin is melted only by the current feeding. Thus, in the first embodiment of the present invention, by causing the vibration and current feeding to stop at the same timing, stop control is facilitated, and the vibration is stopped after the thermoplastic resin is certainly melted.

Intensity of the electric current to be fed may be changed as appropriate in accordance with the melting points and thicknesses of the thermoplastic resins forming the composite materials 11a and 11b, the content of the carbon fibers and the like.

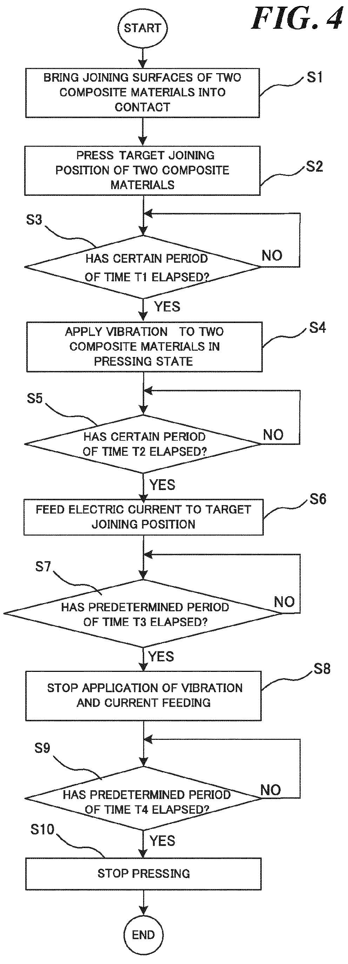

Fig. 4 is a flowchart illustrating processes of a method for manufacturing a joined body according to the first embodiment of the present invention. First, the joining surfaces 11c of the two composite materials 11a and 11b are brought into contact (S1). Subsequently, the target joining position of the two composite materials 11a and 11b is pressed (S2). This pressing is given by the pressing device 13. Then, it is determined whether the pressing time has elapsed for the certain period of time T1 or not (S3), and when the certain period of time T1 has elapsed, vibration is given to the two composite materials 11a and 11b in a state in which the pressing is continued (S4). Then, it is determined whether the vibration time has elapsed for the certain period of time T2 or not (S5), and when the certain period of time T2 has elapsed, the electric current is fed to the target joining position (S6). The vibration to the two composite materials 11a and 11b is performed by the vibration generating device 17, and the current feeding is started by turning on the switch 14.

Then, it is determined whether the predetermined period of time T3 required for joining of the two composite materials 11a and 11b has elapsed or not (S7), and when the predetermined time T3 has elapsed, application of the vibration and current feeding are stopped (S8), and it is further determined whether the predetermined time T4 has elapsed or not (S9), and when the predetermined time T4 has elapsed, pressing is stopped (S10), and the joining is finished.

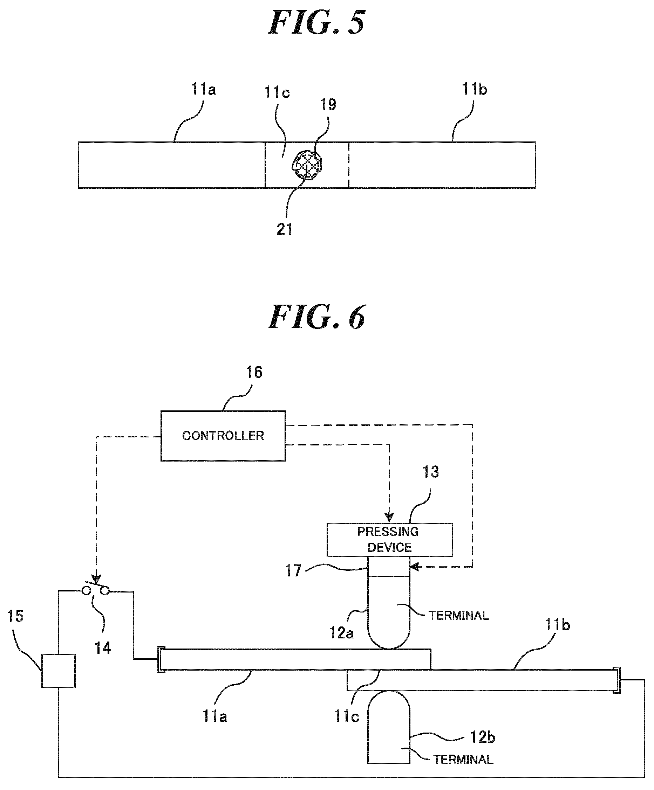

Fig. 5 is a plan view illustrating an example of the joining surfaces 11c of the two composite materials 11a and 11b in the first embodiment of the present invention. The composite materials 11a and 11b are joined under the conditions illustrated in Table 1.

[Table 1]

| | JOINING CONDITION |
|---|---|
| PLATE-MATERIAL DIMENSION | 100×25×t1.6 |
| TERMINAL DIAMETER | $\phi 8$ |
| PRESSING FORCE (PLANAR PRESSURE) | 14.9N/mm$^2$ |
| VIBRATION FREQUENCY | 20kHz |
| ELECTRIC CURRENT VALUE | 30A |
| CURRENT FEEDING TIME | 5sec |

The plate material dimensions were $100 \times 25 \times$ t1.6 mm, the terminal diameter was $\phi 8$, the pressure was 14.9 N/mm$^2$, the vibration frequency was 20 kHz, the electric current value was 30A, and the current feeding time was 5 sec.

As illustrated in Fig. 5, the joining portion 21 is formed in a range including the target joining position 19 of the joining surface 11c where the two composite materials 11a and 11b are overlapped with each other. This is to give the vibration to the target joining position 19 of the joining surface 11c, to facilitate current feeding to the target joining position 19 of the joining surfaces 11c of the two composite materials 11a and 11b, and to melt and join the thermoplastic resin by heat generation by electric conduction. As a result, welding on a portion other than the target joining position 19 of the joining surface 11c can be prevented.

Moreover, in the manufacturing method according to the first embodiment of the present invention, joining of the joining spot at a spot other than the target joining position can be prevented and moreover, scattering of the joining spot to a plurality of spots can be prevented and thus, lowering of the joining strength can be prevented, and esthetic appearance of the joining portion is not deteriorated.

In the above explanation, the example in which the joining current is fed through the terminal 12a or 12b to which pressure and vibration are applied is explained, but the current is not necessarily fed through the terminal 12a or 12b to which pressure and vibration are applied. As illustrated in Fig. 6, the current may be fed by electrode terminals for current feeding which are connected to predetermined spots on the composite materials 11a and 11b. In the first embodiment illustrated in Fig. 6, the electrode terminal for current feeding is mounted on an end portion of each of the composite materials 11a and 11b, and the electric current is fed to the joining surface 11c from the power supply 15. In this case, too, the joining current can be better conducted through the target joining position of the joining surface 11c immediately below the terminal by applying the vibration, and the joining position can be made stable.

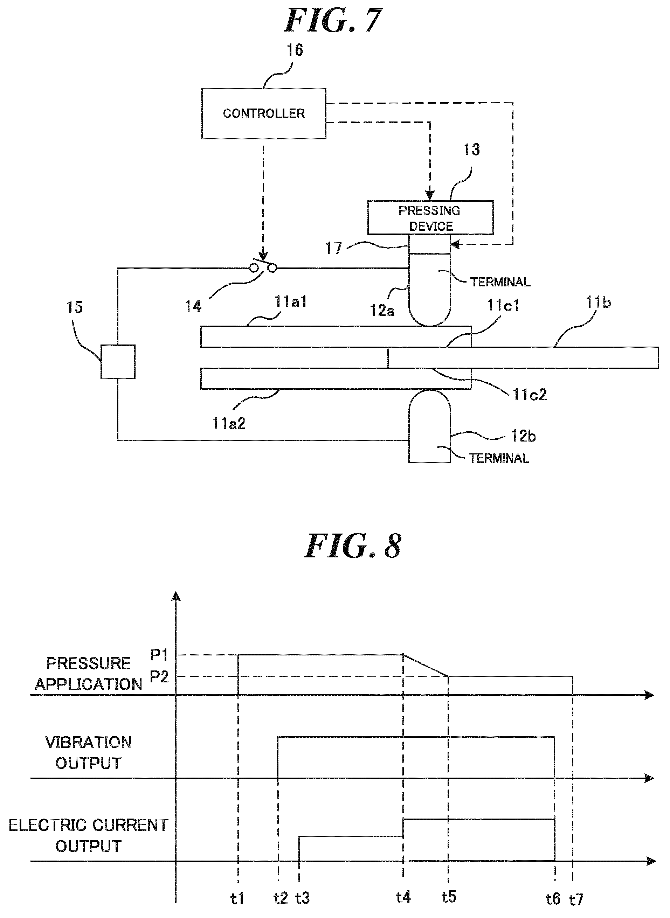

Moreover, in the above explanation, the joining of the two composite materials 11a and 11b is explained, but the number of composite materials to be joined is not limited to the first embodiment illustrated in Fig. 1 but as illustrated in Fig. 7, the composite materials to be joined may be three or more. In the first embodiment illustrated in Fig. 7, three composite materials 11a1, 11b, and 11a2 are overlapped with each other, the terminals 12a and 12b are brought into contact with the target joining positions of the respective joining surfaces of the upper and lower two composite materials 11a1 and 11a2, the vibration is applied and the joining surfaces 11c1 and 11c2 are joined by current feeding.

When a plurality of the composite materials are to be joined as in this first embodiment, it is extremely difficult to stabilize the joining position and thus, application of vibration to the composite materials as well as current feeding is effective. That is, by applying the vibration energy to the target joining position of the joining surface 11c1 and 11c2 before current feeding, the electric current can be made to flow better through that portion. In this first embodiment, too, joining at a spot other than the target joining position can be prevented, and moreover, scattering of the joining spot to a plurality of spots can be prevented and thus, lowering of joining strength can be prevented, and esthetic appearance of the joining portion is not deteriorated.

Moreover, in the above explanation, the example in which the vibration generating device 17 is connected to the terminal 12a or 12b to which pressure is applied, and the vibration is applied through the terminal 12a or 12b is explained, but the vibration may be applied to the target joining position of the joining surface from a spot different from the terminal 12a or 12b to which pressure is applied.

Subsequently, a second embodiment of the present invention will be explained. Fig. 8 is a time chart illustrating an example of the operation timing of the composite-material joining device according to the second embodiment of the present invention. In the second embodiment of the present invention, as compared with the above-described first embodiment, two or more composite materials are joined by pressing with a pressure lower than a predetermined pressure when the two or more composite materials are melted together and brought into a welded state. A hardware configuration of the composite-material joining device according to the second embodiment of the present invention is the same as the hardware configuration of the composite-material joining device according to the first embodiment of the present invention illustrated in Fig. 1.

In Fig. 1, the controller 16 controls the pressing device 13, the vibration generating device 17, and the switch 14 so that the target joining position of the two composite materials 11a and 11b is pressed, vibration is applied to the target joining position of the two composite materials 11a and 11b, and in a state in which the vibration continues, the electric current is fed to the target joining position of the two composite materials 11a and 11b.

That is, in Fig. 8, the controller 16 starts pressing the composite materials 11a and 11b with a predetermined pressure P1 by driving the pressing device 13 at the time t1, generates vibration by driving the vibration generating device 17 at the time t2 after that, turns on the switch 14 at the time t3 so as to apply a voltage to the two composite materials 11a and 11b, and makes the electric current flow through the carbon fibers of the composite materials 11a and 11b. Here, pressure P1 is a predetermined pressure good for starting to press.

Then, at the time t4, when the two composite materials 11a and 11b are melted together and brought into the welded state, the controller 16 starts lowering the pressure by the pressing device 13 and executes control such that the target joining position is pressed with a pressure P2 lower than the predetermined pressure P1 at starting to press.

When the pressure becomes the small pressure P2 at the time t5, application of the vibration and current feeding are stopped at time t6 after a predetermined period of time required for joining of the two composite materials 11a and 11b has elapsed, and moreover, pressing is stopped at time t7 after that.

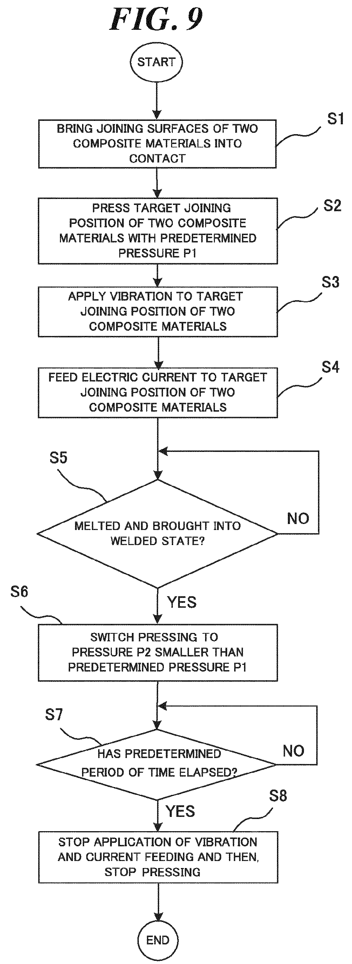

Fig. 9 is a flowchart illustrating processes of a method for manufacturing a joined body according to the second embodiment of the present invention. First, the joining surfaces 11c of the two composite materials 11a and 11b are brought into contact (S1). Subsequently, the target joining position of the two composite materials 11a and 11b is pressed by the predetermined pressure P1 (S2) and then, vibration is applied to the target joining position of the two composite materials 11a and 11b (S3), and the electric current is fed to the target joining position of the two composite materials 11a and 11b (S4).

Subsequently, it is determined whether the two composite materials 11a and 11b are melted together and brought into the welded state or not (S5). When it is determined that the two composite materials 11a and 11b are melted together and brought into the welded state in this determination, the target joining position of the two composite materials 11a and 11b is pressed by switching the pressure to the pressure P2 lower than the predetermined pressure P1 (S6). Moreover, the electric current value may be made larger as necessary.

Then, it is determined whether the predetermined period of time required for joining of the two composite materials 11a and 11b has elapsed or not (S7), and when the predetermined period of time has elapsed, application of the vibration and current feeding are stopped, and then, the pressing is stopped (S8), and the joining is finished.

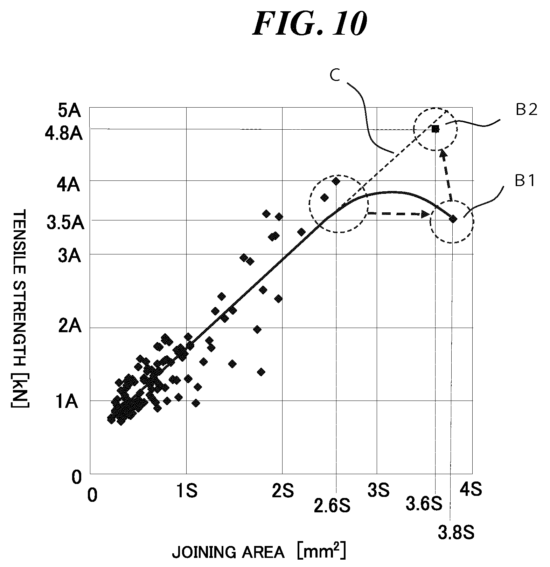

Fig. 10 is a graph illustrating an example of a relationship between tensile strength of the joining portion of the two composite materials and a joining area in the second embodiment of the present invention. When the electric current was increased so as to enlarge the joining area at a constant pressure P1 (= 14.9 N/mm$^2$) during the period of starting to press, as indicated by a solid line in Fig. 10, the tensile strength increased in proportion to the joining area up to a predetermined joining area, but when the joining area reached the vicinity of 2.6S mm$^2$ (S is a constant), the tensile strength did not increase any more even if the fed electric current was increased so as to enlarge the joining area.

Here, a broken line C in Fig. 10 is a virtual line obtained by linearly extending an approximate curve acquired from the relationship between the joining area and the tensile strength to the vicinity of the joining area of 2.6S mm$^2$. In the range up to 2.6S mm$^2$, the tensile strength is in proportion to the joining area, and when the joined body was peeled off so as to observe the joining surface, no mark of the melted thermoplastic resin outflowing to diffuse was found, and it was confirmed that the thermoplastic resin of the two composite materials was favorably joined. That is, this tensile strength indicates the strength when the thermoplastic resins are favorably joined.

A point B1 is a value indicating a relationship between the tensile strength and the joining area of the joining portion of the two composite materials when the fed electric current was increased at the constant pressure P1 and the joining area was increased from the vicinity of 2.6S mm$^2$ to 3.8S mm$^2$ as described above. The joining conditions of the composite materials 11a and 11b at the point B1 are illustrated in Table 2.

[Table 2]

|  | FIRST STAGE | SECOND STAGE |
|---|---|---|
| PLATE-MATERIAL DIMENSION | 100 × 25 × t1. 6 | |
| TERMINAL DIAMETER | $\phi8$ | |
| PRESSING FORCE (PLANAR PRESSURE) | 14.9N/mm$^2$ | 14.9N/mm$^2$ |
| VIBRATION FREQUENCY | 20kHz | 20kHz |
| ELECTRIC CURRENT VALUE | 10A | 30A |

(continued)

|  | FIRST STAGE | SECOND STAGE |
|---|---|---|
| CURRENT FEEDING TIME | 5sec | 5sec |

The tensile strength at the point B1 is 3.5A kN (A is a constant), and the tensile strength is rather lowered as compared with the tensile strength 4A kN when the joining area is 2.6S mm$^2$.

When the joined body at the point B1 was peeled off so as to observe the joining surface, an area of welding mark was enlarged but the mark indicating that the melted thermoplastic resin flowed out and dispersed to the outside of the target joining position were confirmed. As described above, if the melted thermoplastic resin flows out to the outside of the target joining position, the thermoplastic resin playing a role as a binder runs short, which causes the strength to be weakened, and it is presumed that an effective joining area in which the thermoplastic resins are joined together and contribute to the tensile strength is small.

On the other hand, a point B2 indicates a case in which the electric current at the same value as the electric current value under the joining condition at the point B1 was fed, and after the two composite materials 11a and 11b were melted together and brought into the welded state, pressing was performed with the pressure P2 (= 6.0 N/mm$^2$) lower than the predetermined pressure P1 at starting to press. The joining conditions of the composite materials 11a and 11b at the point B2 are shown in Table 3.

[Table 3]

|  | FIRST STAGE | SECOND STAGE |
|---|---|---|
| PLATE-MATERIAL DIMENSION | 100×25×t1.6 | |
| TERMINAL DIAMETER | $\phi$8 | |
| PRESSING FORCE (PLANAR PRESSURE) | 14.9N/mm$^2$ | 6.0N/mm$^2$ |
| VIBRATION FREQUENCY | 20kHz | 20kHz |
| ELECTRIC CURRENT VALUE | 10A | 30A |
| CURRENT FEEDING TIME | 5sec | 5sec |

Under the joining conditions at the point B1, the pressing was continuously performed with the predetermined pressure P1 at starting to press even after the two composite materials 11a and 11b were melted together and brought into the welded state. At the point B2, however, after the two composite materials 11a and 11b were melted together and brought into the welded state, pressing was performed with the pressure P2 lower than the predetermined pressure P1 at starting to press. As a result, the joining area became 3.6S mm$^2$, which was a substantially equal area though it was slightly smaller than the joining area of 3.8S mm$^2$ at the point B1, the tensile strength was 4.8A mm$^2$, which was higher than the tensile strength of 3.5A mm$^2$ at the point B1.

From the fact that a value of the tensile strength to the joining area at the point B2 is substantially on a broken line C, the value is considered to indicate the strength when the thermoplastic resins are joined to each other favorably.

Therefore, when it is determined that the two composite materials 11a and 11b are melted and brought into a welded state, lowering of the tensile strength can be prevented by pressing the target joining position of the two composite materials 11a and 11b with the pressure P2 lower than the predetermined pressure P1 at starting to press.

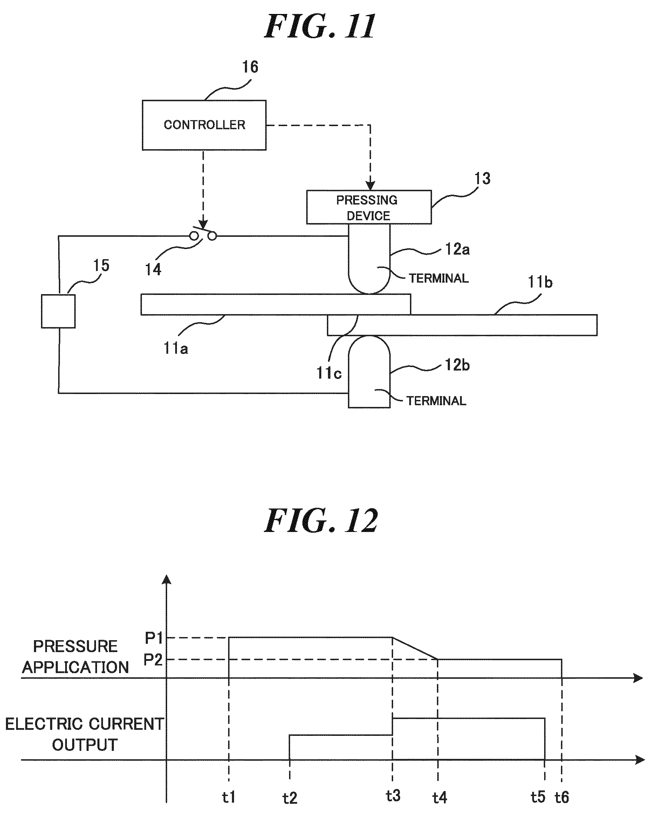

Fig. 11 is a configuration view of an example of a composite-material joining device according to a third embodiment of the present invention. In this example of the composite-material joining device according to the third embodiment, the vibration generating device 17 is omitted from the example of the composite-material joining device according to the second embodiment of the present invention. That is, pressing is performed and the electric current is fed without applying vibration to the target joining position of the two composite materials 11a and 11b, the two or more composite materials are joined by Joule heat, and when the two or more composite materials are melted and brought into the welded state, pressing is performed with the pressure lower than the predetermined pressure at starting to press so as to join the two or more composite materials.

Fig. 12 is a time chart illustrating an example of the operation timing of the composite-material joining device according to the third embodiment of the present invention. From the example illustrated in Fig. 8, Step S3 is omitted. The controller 16 controls the pressing device 13 and the switch 14 so that the electric current can be fed to the target joining position while the two composite materials 11a and 11b are pressed.

That is, the controller 16 starts pressing of the composite materials 11a and 11b with the predetermined pressure P1 by driving the pressing device 13 at the time t1, turns on the switch 14 at the time t2 after that so as to apply a voltage to the two composite materials 11a and 11b and feeds the electric current to the carbon fibers in the composite materials 11a and 11b.

Then, when the two composite materials 11a and 11b are melted together and brought into the welded state at the time t3, the controller 16 starts lowering pressure of the pressing device 13 and executes control such that the target joining position is pressed with a pressure P2 lower than the predetermined pressure P1. Moreover, the controller 16 increases the electric current value at the time t3. The electric current value may be constant or may be gradually lowered.

When the pressure becomes the small pressure P2 at the time t4, the switch 14 is turned off at the time t5 after a predetermined period of time has elapsed, and moreover, pressing is stopped at the time t6 after that.

Here, when the two composite materials 11a and 11b are melted and brought into the welded state, the target joining position is pressed with the pressure P2 lower than the predetermined pressure P1 in order to prevent such a situation that the thermoplastic resin in the welded state spreads to a wide range outside of the target joining position, the thermoplastic resin at the target joining position is pushed out more than necessary, and tensile strength lowers. That is, it is necessary to prevent such a situation that the thermoplastic resin playing a role as a binder of the composite materials 11a and 11b at the target joining position is dispersed to the outside of the target joining position and an absolute amount of the thermoplastic resin required to ensure tensile strength of the joining portion runs short.

The pressure P1 is a pressure required to sandwich the two composite materials 11a and 11b with the terminals 12a and 12b brought into contact with the respective surfaces of the two composite materials 11a and 11b so as to cause the pressure to reduce contact resistance between the terminals and the composite materials and also between the composite materials by pressure and to bring about a state in which the joining surface between the composite materials are melted and welded. The pressure P2 is a pressure lower than the pressure P1 at starting to press and cannot necessarily be determined to be a single value since composition, and viscosity of the thermoplastic resin, a content of the carbon fibers, a thickness of the composite material and the like need to be considered, but it is a pressure at 90% or less of the pressure P1 and more preferably a pressure at 50% or less, for example.

The determination on whether or not the two composite materials 11a and 11b are melted and brought into the welded state may be made by the fact that time from start of current feeding has reached the predetermined period of time determined in advance or may be made by monitoring the joined state of the target joining position by the temperature distribution measuring device such as a thermography device or the like.

Specifically, by measuring in advance time from start of current feeding to when the temperature of the thermoplastic resin reaches the melting point, pressure application may be controlled by the measured time. In this case, the pressing can be weakened immediately before the two or more composite materials are melted and welded, without providing a device for measuring the temperature, and diffusion of the melted thermoplastic resin can be reliably prevented.

Moreover, by monitoring the temperature of the target joining position of the two composite materials 11a and 11b, determination that the two composite materials 11a and 11b are melted and brought into the welded state may be made when the thermoplastic resin on the joining surface reaches the melting point using the temperature as an index. When the temperatures of the two composite materials 11a and 11b reach the melting point, the two composite materials 11a and 11b are melted and in the welded state and thus, the welded state can be grasped more accurately. As described above, since it is only necessary that the pressure is reduced when the temperature of the thermoplastic resin reaches the melting point, switching control of pressing is facilitated. Moreover, since the pressure can be weakened immediately before the two or more composite materials are melted and welded, diffusion of the melted thermoplastic resin can be reliably prevented.

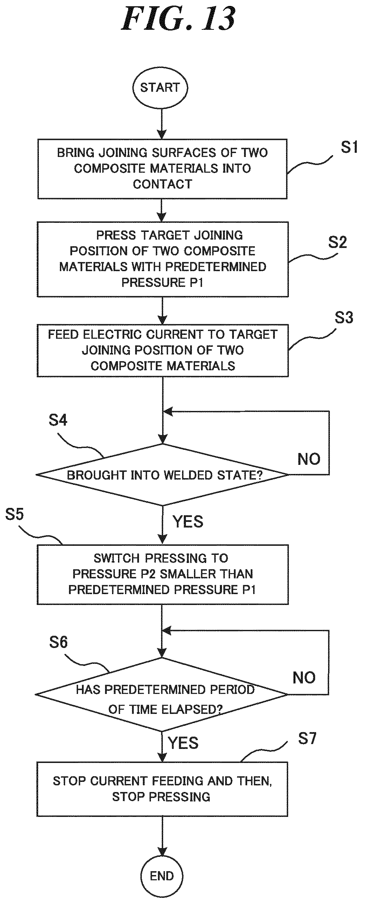

Fig. 13 is a flowchart illustrating an example of processes of the method for manufacturing a joined body according to the third embodiment of the present invention. First, the joining surfaces 11c of the two composite materials 11a and 11b are brought into contact (S1). Subsequently, the target joining position of the two composite materials 11a and 11b is pressed with the predetermined pressure P1 (S2) and then, the electric current is fed to the target joining position of the two composite materials 11a and 11b (S3).

Subsequently, it is determined whether the two composite materials 11a and 11b are melted and brought into the welded state or not (S4). This determination is made, as described above, by the facts that the time since application of a voltage is started has reached the predetermined time determined in advance, that the joining portion at the target joining position is brought into the welded state by monitoring using a thermography device or the like, that the temperature of the target joining position has reached the melting point of the thermoplastic resin and the like.

When it is determined at the determination at Step S4 that the two composite materials 11a and 11b are melted and brought into the welded state, the target joining position of the two composite materials 11a and 11b is pressed with the pressure P2 lower than the predetermined pressure P1 (S5), where pressure is switched from the pressure P1 to pressure P2. Moreover, the electric current value may be made larger as necessary. As a result, such a situation can be prevented that the thermoplastic resin at the target joining position in the welded state is pushed out more than necessary and the tensile strength lowers.

Then, it is determined whether the predetermined time required for the two composite materials 11a and 11b to be joined has elapsed or not (S6), and when the predetermined time has elapsed, current feeding is stopped, and then, pressing is also stopped (S7), and the joining process is finished. Fig. 11 illustrates the example in which one pressing device 13 is provided, but the pressing device may be provided also on the terminal 12b side. That is, it may also be so configured that the pressing devices 13 are provided on both the terminal 12a side and the terminal 12b side and pressure is applied from both the terminals 12a and 12b.

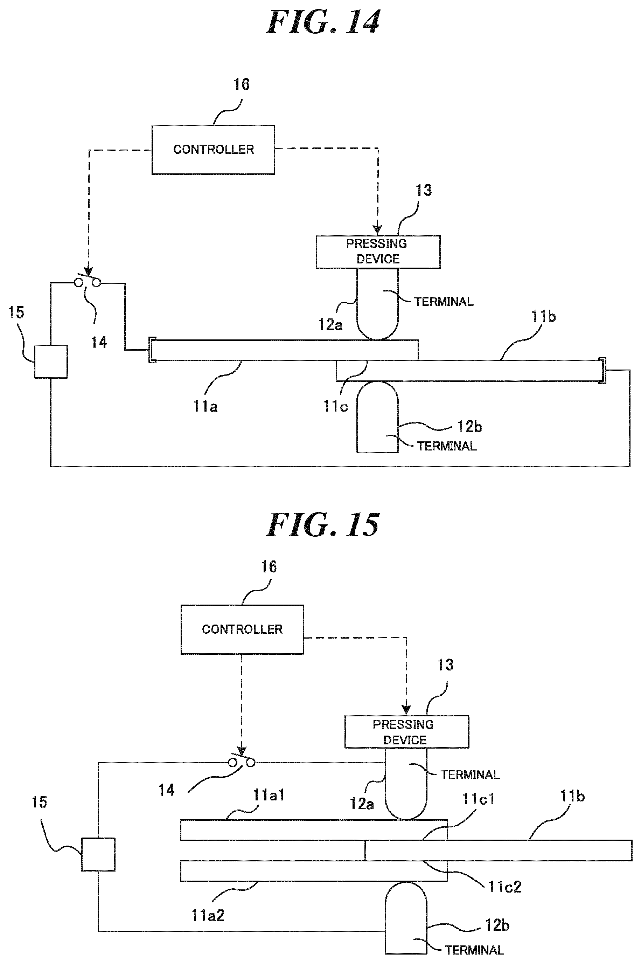

Subsequently, Fig. 14 is a configuration view of another example of a composite-material joining device according to the third embodiment of the present invention. In this another example of the third embodiment, instead of feeding of the joining electric current through the terminals 12a and 12b with which pressure is applied, the joining electric current is fed from the electrode terminal for current feeding connected to an end portion of each of the composite materials 11a and 11b as compared with the example in the third embodiment illustrated in Fig. 11.

In the another example of the third embodiment illustrated in Fig. 14, the electrode terminal for current feeding is connected to the end portion of each of the composite materials 11a and 11b as compared with the example of the third embodiment illustrated in Fig. 11. That is, the electrode terminal for current feeding is connected to the switch 14 or the power supply 15 at a predetermined spot of the composite materials 11a and 11b and feeds an electric current to the composite materials 11a and 11b from the power supply 15. By placing the vibration generating device 17 illustrated in the example of the second embodiment on the terminal 12a, the joining current can be better conducted through the target joining position of the joining surface immediately below the terminal, and the joining position can be made stable.

Moreover, in the above explanation, the joining of the two composite materials 11a and 11b is explained, but the number of composite materials to be joined is not limited to two of the composite materials 11a and 11b and as in still another example of the composite-material joining device according to the third embodiment illustrated in Fig. 15, the number of composite materials to be joined may be three or more. In the still another example of the third embodiment illustrated in Fig. 15, the three composite materials 11a1, 11b, and 11a2 are overlapped with each other as compared with the example of the third embodiment illustrated in Fig. 11, the terminals 12a and 12b are brought into contact with the target joining position of the joining surface of each of the upper and lower two composite materials 11a1 and 11a2, and the joining surfaces 11c1 and 11c2 are joined by current feeding.

When the plurality of the composite materials are to be joined as in the still another example of the third embodiment, it is extremely difficult to stabilize the joining position and thus, application of vibration as well as feeding current to the composite material is effective. By disposing the vibration generating device 17 illustrated in the example of the second embodiment on the terminal 12a, the vibration energy can be applied to the target joining position of the joining surfaces 11c1 and 11c2 before the current feeding, and the electric current can be better conducted through the portion and thus, the joining position can be made stable.

In the still another example of the third embodiment, too, such a situation that the melted thermoplastic resins are pushed out to the outside of the target joining position and dispersed can be suppressed, and thus, the tensile strength at the target joining position can be prevented from lowering. Moreover, when vibration is applied to the composite material as well as current feeding, a spot other than the target joining position can be prevented from joining, and moreover, the joining spot can be prevented from scattering to a plurality of spots and thus, joining strength is prevented from lowering, and esthetic appearance of the joining portion is not deteriorated.

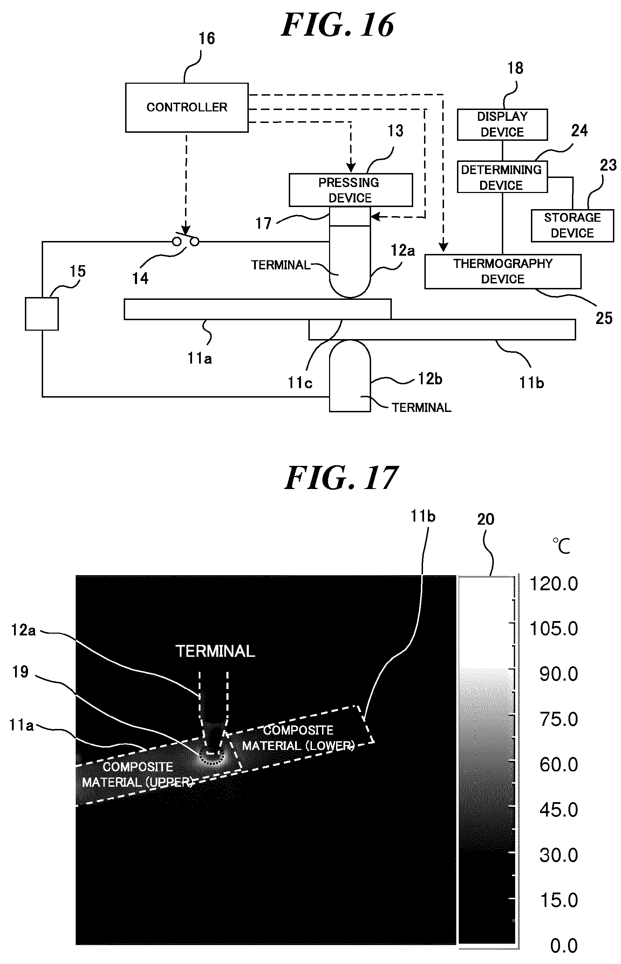

Subsequently, a fourth embodiment of the present invention will be explained. Fig. 16 is a configuration view of an example of a composite-material joining device according to the fourth embodiment of the present invention. In this fourth embodiment of the present invention, as compared with the first embodiment illustrated in Fig. 1, a thermography device 25 as a temperature distribution measuring device for obtaining temperature distribution at the target joining position of the two composite materials 11a and 11b, a display device 18 for displaying/outputting an image obtained by the thermography device 25, a storage device 23 storing in advance temperature data serving as a reference for determination of acceptability of joining at the joining spot of the composite materials 11a and 11b, and a determining device 24 for comparing data relating to temperature distribution on the surface of the composite material obtained by the thermography device 25 and the temperature data serving as the reference stored in the storage device 23 and displaying/outputting the result on the display device 18 are additionally provided. The same elements as those in Fig. 1 are given the same reference numerals and duplicated explanation will be omitted.

The thermography device 25 is to obtain an image of temperature distribution by detecting and analyzing infrared rays emitted from the surfaces of a contact spot and its periphery of the composite material 11a in contact with the terminal 12a as the target joining position. Start/stop is controlled by the controller 16. In this example, the thermography device 25 is provided on a part above the composite material 11a in contact with the terminal 12a when seen from the terminal 12a side. Because of the configuration, the temperature distribution on upper planes of the composite materials 11a and 11b including the terminal 12a can be observed. The thermography device 25 may be provided on the terminal 12b side located at an opposite position to the terminal 12a.

A welded spot can be identified by observing heat generation generated by the electric current flowing through the composite materials 11a and 11b with the thermography device 25.

As a temperature distribution measuring device, the other devices than the thermography device may be used. For example, temperature distribution may be acquired by measuring temperatures of the contact spot of the composite material 11a in contact with the terminal 12a and predetermined spots in its periphery by using a radiation thermometer.

The storage device 23 stores the temperature data serving as a reference used for determination of acceptability of joining of the joining spot of the composite materials 11a and 11b in advance. The determining device 24 compares the data relating to the temperature distribution on the surface of the composite material obtained by the thermography device 25 and the temperature data serving as the reference stored in the storage device 23.

Then, when the determining device 24 determines that the data relating to the temperature distribution obtained by the thermography device 25 is within the same range as that of the temperature data serving as the reference, joining is determined to be favorable, while in the other cases, joining is determined to be defective. The determining device 24 stores the determination result in the storage device 23 as necessary and has it displayed on the display device 18. As described above, temperature distribution is acquired by measuring the temperatures of the joining spot of the composite material 11a in contact with the terminal 12a serving as the reference position of the target joining position and predetermined spots in its periphery. Therefore, whether or not it is within an allowable range of welding set around the target joining position can be observed by temperature distribution even if welding occurs away from the terminal and thus, determination of acceptability can be made easily. Moreover, since the thermography device 25 is not intended for observation of the temperature on the joining interface of the composite materials 11a and 11b, the device can be provided at a position away from an upper part or a lower part of the composite materials 11a and 11b. Therefore, it is not restricted by conditions such as the shape and the size of the composite material, a facility in which the joining device is used and the like. Moreover, since the acceptability of joining is determined by the determining device 24, a load of the work of determination of acceptability of joining can be reduced.

The controller 16 controls the pressing device 13 and the switch 14 so that the electric current can be fed to the target joining position while the two composite materials 11a an 11b are pressed, and the electric current is made to flow through the carbon fibers of the composite materials 11a and 11b so as to perform joining by Joule heat. At that time, the thermography device 25 is started, and data relating to the temperature distribution at the target joining position of the two composite materials 11a and 11b is obtained and displayed on the display device 18. Moreover, the determining device 24 compares the data relating to the temperature distribution obtained by the thermography device 25 with the temperature data serving as the reference stored in the storage device 23 and displays/outputs the determination result on the display device 18.

Fig. 17 is a perspective view illustrating an example of an image obtained by the thermography device 25 during joining of the composite materials 11a and 11b when the joining was performed favorably. In Fig. 17, the target joining position 19 of the two composite materials 11a and 11b is pressed by the terminals 12a and 12b, and a case in which the temperature at the target joining position 19 rises at a portion around the terminal 12a, as a center, which is a presser is illustrated. A gauge 20 on the right side indicates a temperature °C. That is, as illustrated in Fig. 17, the temperature at the target joining position 19 rises at a portion around the terminal 12a, as a center, which is the presser, and a case in which joining at the joining spot of the composite materials 11a and 11b is performed favorably is illustrated.

As described above, the data relating to the temperature distribution obtained by the thermography device 25 is displayed on the display device 18 as an image, and joining is performed by monitoring it. That is, while the composite materials 11a and 11b are pressed, the electric current is made to flow through the carbon fibers in the composite materials 11a and 11b so as to generate heat, and the thermoplastic resin is melted and joined. When a predetermined period of time required for joining of the two composite materials 11a and 11b has elapsed, pressing and current feeding are stopped, and joining is finished.

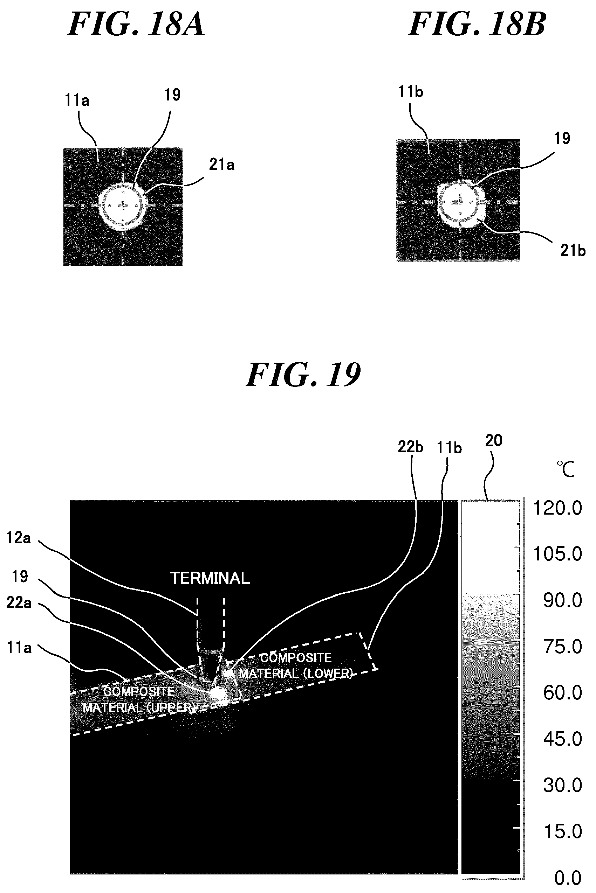

Fig. 18A and Fig. 18B are enlarged photos of the surface of the joining spot of the two composite materials 11a and 11b when the joining was performed favorably. Fig.18A is an enlarged photo of the surface of the joining spot of the composite material 11a which is an upper plate. Fig.18B is an enlarged photo of the surface of the joining spot of the composite material 11b which is a lower plate. Fig.18A and Fig.18B illustrate the photos where the two composite materials 11a and 11b are peeled off after the joining. As illustrated in Fig.18A and Fig.18B, the joining spot of the composite materials 11a and 11b is formed in a range in which both joining portions 21a and 21b include the target joining position 19, and it is known that joining is favorable.

That is, as illustrated in Fig.17, if the temperature at the target joining position 19 rises at a portion around the terminal 12a, as a center, which is a presser, it is known that joining at the joining spot of the composite materials 11a and 11b is performed favorably. Therefore, if the temperature at the target joining position 19 rises at a portion around the terminal 12a, as a center, which is a presser, it can be determined that joining is performed favorably. The storage device 23 stores temperature data serving as the reference for determination of acceptability of the joined state in advance. For example, the temperature data as acceptable determination obtained from various conditions such as physical properties, thickness, joining conditions and the like of the composite material to be joined are stored as reference images in advance, and acceptability of the welded state is determined by comparing it with an image as the temperature data obtained from the thermography. Moreover, the temperature data at the target joining position may be converted into numerical formulas or digitalized and stored in the storage device 23 in advance instead of the reference images.

Fig. 19 is a perspective view illustrating an example of an image obtained by the thermography device 25 during joining of the composite materials 11a and 11b when joining was performed defectively. Fig. 19 illustrates a case in which a temperature rises at an unspecified number of spots away from the terminal 12a (target joining position 19) which is a presser. The gauge 20 on the right side indicates a temperature °C. That is, as illustrated in Fig. 19, the temperature rises at separated spots 22a and 22b away from the terminal 12a (target joining position 19) which is a presser.

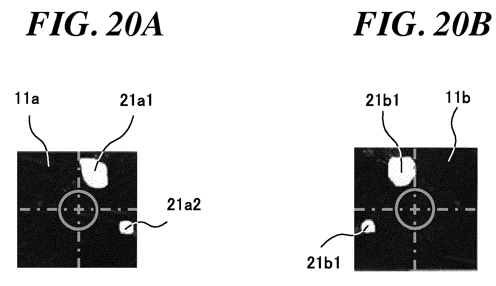

Fig.20A and Fig.20B are enlarged photos of the surface of the joining spot of the two composite materials 11a and 11b when the joining was performed defectively. Fig.20A is an enlarged photo of the surface of the joining spot of the composite material 11a which is an upper plate. Fig.20B is an enlarged photo of the surface of the joining spot of the composite material 11b which is a lower plate. In Fig.20A and Fig.20B, the two composite materials 11a and 11b peeled off after the joining are illustrated.

As illustrated in Fig.20A, the joining spot of the composite material 11a is formed at two spots away from the target joining position 19, and it is known that they are joining portions 21a1 and 21a2. Similarly, as illustrated in Fig.20B, the joining spot of the composite material 11b is also formed at two spots away from the target joining position 19, and it is known that they are joining portions 21b1 and 21b2.

As illustrated in Fig. 19, if the temperature at the target joining position 19 does not rise at a portion around the terminal 12a, as a center, which is a presser (if the temperature rises at an unspecified number of spots away from the target joining position 19), it can be presumed that joining is not performed at all within the range of the target joining position 19 or even if joining is performed within the range of the target joining position 19, it is likely that a joining area is small.

In this case, since there are problems such that joining strength might lower or esthetic appearance would be deteriorated in a manufacture in which the appearance is important, joining is determined to be performed defectively.

Here, the thermography devices 25 may obtain images of the joined state when seen from both directions of the composite material 11a and the composite material 11b and make determination of acceptability of the welded state on the basis of a result obtained by synthesizing them. Moreover, images of the joined state when seen from the both directions of the composite material 11a and the composite material 11b may be obtained by moving the one thermography device 25.

Moreover, the thermography device 25 may be moved by a predetermined angle around the terminal 12a or 12b as a center of a concentric circle. When the temperature distribution is observed from one direction of the terminal 12a or 12b, it is difficult to determine acceptability of joining by observing a temperature rise on a rear surface (a side opposite to a surface facing the thermography device) of the terminal 12a or 12b, and thus, by rotationally moving the thermography device 25 by 90 to 180 degrees, for example, using the terminal 12a or 12b as the center of the concentric circle, general temperature distribution around the terminal 12a or 12b can be obtained as compared with the observation of the temperature distribution from one direction. As described above, by monitoring the image obtained by the thermography device 25, acceptability of the joining spot of the two composite materials 11a and 11b can be easily determined.

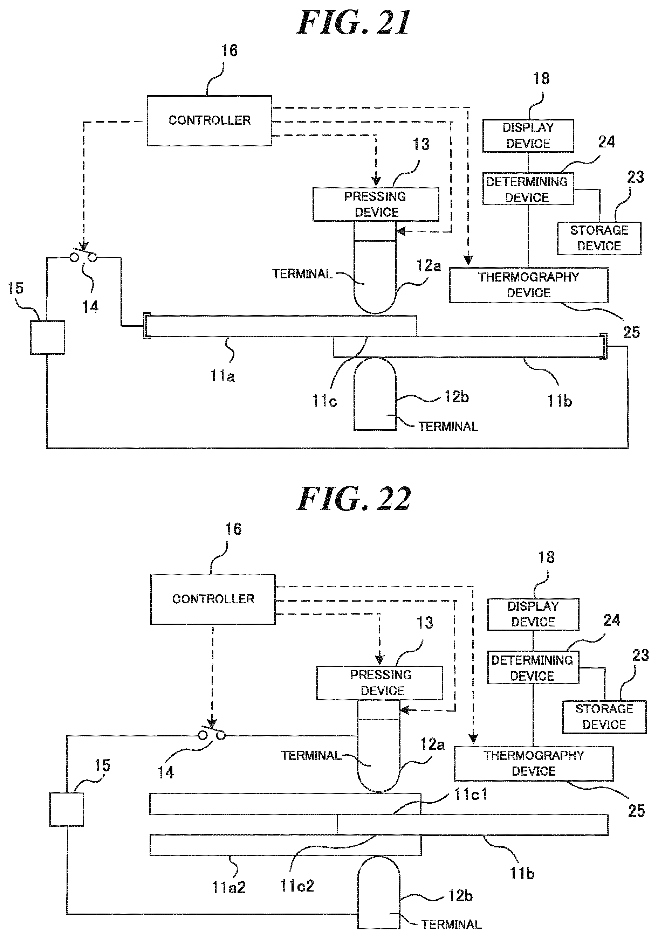

In the above explanation, the example in which the joining current is fed through the terminals 12a and 12b with which pressure is applied is explained, but the electric current is not necessarily fed through the terminals 12a and 12b with which pressure is applied. As illustrated in Fig.21, the electric current may be fed through an electrode terminal for current feeding connected to the switch 14 or the power supply 15. The electrode connected to a predetermined spot of each of the composite materials 11a and 11b. In Fig. 21, the electrode terminal for current feeding is connected to an end portion of each of the composite materials 11a and 11b.

Moreover, in the above explanation, joining of the two composite materials 11a and 11b is explained, but the number of composite materials to be joined is not limited to that, and as illustrated in Fig. 22, the number of composite materials to be joined may be three or more. In Fig. 22, three composite materials 11a1, 11b, and 11a2 are overlapped with each other, and the terminals 12a and 12b are brought into contact at the target joining position of the respective joining surfaces of the upper and lower two composite materials 11a1 and 11a2 of them and the electric current is fed thereto.

Moreover, in the embodiments of the present invention, it may be so configured that the vibration generating device for applying vibration, not shown, is placed on the terminal 12a, predetermined vibration is applied to the target joining position on the joining surface before current feeding, and the joining current is fed after contact resistance of that part is lowered. In this case, since the joining current can be better conducted through the target joining position of the joining surface immediately below the terminal, the joining position can be made stable. As a result, the joining spot can be prevented from joining at a spot other than the target joining position, and moreover, the joining spot can be prevented from scattering to a plurality of spots and thus, joining strength can be prevented from lowering and also, esthetic appearance of the joining portion is not deteriorated.

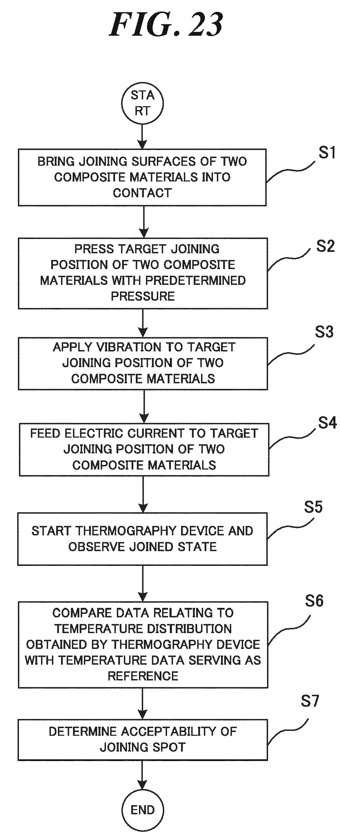

Fig. 23 is a flowchart illustrating an example of processes of an evaluation method of joining of composite materials according to the embodiment of the present invention. First, the joining surfaces 11c of the two composite materials 11a and 11b are brought into contact (S1). Subsequently, the target joining position of the two composite materials 11a and 11b is pressed with a predetermined pressure (S2), vibration is applied (S3), and then, the electric current is fed to the target joining position of the two composite materials 11a and 11b (S4).

Subsequently, the thermography device 25 is started, and the joined state is observed (S5). That is, data relating to temperature distribution of the target joining position of the two composite materials 11a and 11b is obtained, and an image of the temperature distribution of the joining spot is observed. Then, the data relating to the temperature distribution obtained by the thermography device 25 is compared with the temperature data serving as a reference (S6), and acceptability of the joining spot is determined (S7).

As described above, since the image as the data relating to the temperature distribution obtained by the thermography device 25 is monitored in a joining process of the two composite materials 11a and 11b, acceptability of the joining can be easily determined without peeling off the two composite materials for inspection after joining. Therefore, it is particularly effective for joining of the composite materials in which the carbon fibers are dispersed at random in the thermoplastic resin.

Subsequently, a joined body according to the embodiment of the present invention will be explained. A joined body of an embodiment of the present invention is obtained by joining two or more composite materials by Joule heat at the same time as application of vibration or in a state in which the vibration is being applied while joining surfaces of the two or more composite materials containing carbon fibers and a thermoplastic resin are in contact.

Here, regarding the carbon fibers, the thermoplastic resin, and the composite material, those same as described above can be used. The composite material is not particularly limited, but those in which the carbon fibers are dispersed at random in the thermoplastic resin are preferable, and the carbon fiber is preferably discontinuous having an average fiber length of 1 to 100 mm. The carbon fibers may be present in a state of carbon fiber bundles or single fibers. The carbon fiber bundles and the single fibers may be present at an appropriate ratio. That is because a welding part formed by current feeding is basically concentrated to one spot, but the details of the reason are not known. The method for manufacturing a joined body is not particularly limited, and injection molding and compression molding can be examples.

The content of the carbon fibers in the composite material in an embodiment of the present invention is preferably 10 to 90% in volume percent (Vf), considering a balance of joining strength of the joined body, designability, and productivity. With Vf at 10% or more, the electric current can be stably conducted through the composite material. Moreover, with Vf at 90% or less, a resistance value can be ensured, and Joule heat can be obtained. In order to obtain a stable joined body from the viewpoint of current feeding and heat generation, Vf is more preferably 20 to 55% and Vf is still more preferably 20 to 50%.

The two or more composite materials have at least one plane part or curved part. The plane parts or the curved parts face and overlap with each other and are brought into close contact so as to form the joining surface. The plane parts forming the joining surface are both flat. If the surfaces to be joined are curved parts, the radiuses of curvature of the both are substantially the same and both are flat. Here, the term flat means that smoothness on the both surfaces of the plane parts or curved parts to be overlapped with each other are favorable, and they do not have a projection part such as an energy director, for example. As one of indexes indicating that the surface is smooth, Ra is preferably 300 or less or more preferably 100 or less (conforming to JIS B 0601:2013).

Here, the number of plane parts or curved parts of the composite materials to be joined may be two or more. That is, the joined body of an embodiment of the present invention may have independent two or more joining portions, having a plurality of joining surfaces.

It is only necessary that the composite material used in an embodiment of the present invention has one or more of, either of or both of the flat plane part and the flat curved part for forming the joining portion, and the shape of a portion not involved in joining is not particularly limited. As long as the joining surface is provided, the shapes of those other than the joining surface may be the same or different. It is needless to say that the plane part or the curved part not involved in joining may be provided.

Moreover, it is only necessary that, on the plane part of the composite material to be overlapped, the welding part can be formed on the overlapped joining surfaces, and the shape or the area may be the same or different. The shape of the plane part to be overlapped is not particularly limited. For example, it may be polygonal, circular, elliptic or a combination of those shapes. Moreover, a thickness of the joining portion in the two or more composite materials to be overlapped is not particularly limited, and the thickness may be the same or different. Moreover, the thickness of the joining portion of the respective composite materials does not have to be uniform.

At the same time as vibration is applied or in a state that vibration is being applied, while the joining surfaces where the flat parts of the two or more composite materials as above are overlapped are in contact, the two or more composite materials are joined by Joule heat. Here, the direction of applying vibration may be either the horizontal direction or the perpendicular direction with respect to the joining surfaces of the two or more composite material, but vibration in the perpendicular direction is preferable as described above. The method for joining by Joule heat is also as described above.

The joining surface in the joined body of an embodiment of the present invention has a substantially circular welding part as illustrated in Fig. 5, for example. The welding part is a part in which the thermoplastic resin constituting the composite material is heated by Joule heat by current feeding and melted and then, cooled and solidified.

In the joined body of an embodiment of the present invention, since the plane or curved surface of the composite material constituting the joining surface is smooth, the thickness of the joining portion overlapped and welded is substantially equal to the total of the thicknesses of the overlapped composite materials. Moreover, though depending on an area of the welding part, a part of the thermoplastic resin melted by current feeding hardly protrudes from the joining portion or particularly from the joining surface, and designability is favorable. Moreover, unlike the welding by ultrasonic welding, a projection part or a recess part is not generated on the surface on a side opposite to the joining surface of the composite material in the joining portion, and surface flatness and designability are favorable.

According to the present invention, it is obvious that a joined body includes the manufacturing methods in the following three aspects (1), (2), and (3) using the above-described method, for example

(1) A method for manufacturing a joined body comprising the steps that, in a state in which joining surfaces of two or more composite materials containing carbon fibers and a thermoplastic resin are brought into contact, a target joining position of the two or more composite materials is pressed, vibration is applied to the target joining position in a state in which the joining surfaces of the two or more composite materials are brought into contact, and in a state in which the vibration is applied to the two or more composite materials which are being pressed, an electric current for joining the two or more composite materials by Joule heat is fed to the target joining position.

(2) The method for manufacturing a joined body described in the above-described (1), wherein the vibration applied to the target joining position of the two or more composite materials is vibration such that the joining surfaces of the two or more composite materials are heated to a temperature equal to or lower than a melting point of the thermoplastic resin.

(3) The method for manufacturing a joined body described in the above-described 1 or 2, wherein, when the two or more composite materials are melted together and brought into a welded state, the two or more composite materials are joined by pressing with a pressure lower than the predetermined pressure.

Some embodiments of the present invention have been explained, but these embodiments are presented as examples and are not intended to limit a scope of the invention. These novel embodiments can be put into practice in the other various forms and are capable of various omissions, replacement, and changes within a range not departing from the gist of the invention. These embodiments and their variations are included in the scope and the gist of the invention and also included in the invention described in claims and their equivalents.

DESCRIPTION OF REFERENCE NUMERALS AND SYMBOLS

11   composite material
12   terminal
13   pressing device
14   switch
15   power supply
16   controller
17   vibration generating device
19   target joining position
20   gauge
21   joining portion
22   separated spot
23   storage device
24   determining device
25   thermography device

**Claims**

**1.** A composite material joining device, comprising:

a pressing device configured to press a target joining position of two or more composite materials containing carbon fibers and a thermoplastic resin, in a state in which joining surfaces of the two or more composite materials are in contact;

a vibration generating device configured to apply vibration to the target joining position in a state in which the joining surfaces of the two or more composite materials are in contact; and

a power supply for feeding an electric current for joining the two or more composite materials by Joule heat to the target joining position at the same time when or in a state in which vibration is applied by the vibration generating device to the two or more composite materials pressed by the pressing device.

2. The composite material joining device according to claim 1, wherein
the vibration generating device applies vibration to the joining surfaces so that the joining surfaces of the two or more composite materials are heated to a temperature equal to or lower than a melting point of the thermoplastic resin.

3. The composite material joining device according to claim 1 or 2, wherein
the vibration generating device applies vibration in a direction perpendicular to the joining surfaces of the two or more composite materials.

4. The composite material joining device according to any one of claims 1 to 3, wherein
a vibration frequency of the vibration generating device is several kHz to several 100 kHz.

5. The composite material joining device according to any one of claims 1 to 4, further composing
a controller configured to control the pressing device so that, when the two or more composite materials are melted together and welded, the pressing is performed with a pressure lower than a predetermined pressure.

6. The composite material joining device according to claim 5, wherein
the controller controls the pressing device so that the pressing is performed with a pressure lower than a predetermined pressure when a temperature of the thermoplastic resin on the joining surfaces of the two or more composite materials reaches a melting point.

7. The composite material joining device according to any one of claims 1 to 6, further comprising:

a temperature distribution measuring device configured to measure temperature distribution on surfaces of, the target joining position where the pressing is performed by the pressing device and a periphery of the target joining position; and

a determining device configured to determine whether data obtained by the temperature distribution measuring device is within a same range as that of temperature data serving as a reference stored in advance.

8. A method for manufacturing a joined body, comprising the steps of:

pressing a target joining position of two or more composite materials containing carbon fibers and a thermoplastic resin in a state in which the joining surfaces of the two or more composite materials are in contact;

applying vibration to the target joining position in a state in which the joining surfaces of the two or more composite materials are in contact; and

feeding an electric current for joining the two or more composite materials by Joule heat to the target joining position at the same time when or in a state in which vibration is applied to the pressed two or more composite materials to join the two or more composite materials so as to manufacture the joined body.

9. The method for manufacturing a joined body according to claim 8, wherein
the vibration applied to the target joining position of the two or more composite materials is vibration for heating the joining surfaces of the two or more composite materials to a temperature equal to or lower than a melting point of the thermoplastic resin.

10. The method for manufacturing a joined body according to claim 8 or 9, wherein
the vibration applied to the target joining position of the two or more composite materials is vibration in a direction perpendicular to the joining surfaces of the two or more composite materials.

11. The method for manufacturing a joined body according to any one of claims 8 to 10, wherein
a vibration frequency of the vibration applied to the target joining position of the two or more composite materials is several kHz to several 100 kHz.

**12.** The method for manufacturing a joined body according to any one of claims 8 to 11, wherein
the carbon fibers are arranged by being dispersed at random in an in-plane direction of the composite material.

**13.** The method for manufacturing a joined body according to any one of claims 8 to 12, wherein an average fiber length
of the carbon fibers is 1 to 100 mm.

**14.** The method for manufacturing a joined body according to any one of claims 8 to 13, wherein
when the two or more composite materials are melted together and welded, the two or more composite materials
are joined by pressuring with a pressure lower than a predetermined pressure.

**15.** The method for manufacturing a joined body according to claim 14, wherein
pressure with a pressure lower than the predetermined pressure is performed when the temperature of the thermoplastic resin of the joining surfaces of the two or more composite materials reaches a melting point.

**16.** A method for manufacturing a joined body, wherein
using the composite-material joining device according to claim 7, the method determines, by a determining device,
whether data relating to temperature distribution on a surface of the composite material obtained by the temperature
distribution measuring device is in the same range as that of the temperature data serving as a reference stored in
advance in a storage device, and evaluates joining of the composite material as acceptable if it is in the same range,
while evaluating joining of the composite material as defective if it is not in the same range.

**17.** A joined body obtained by the method for manufacturing a joined body according to any one of claims 8 to 16.

**18.** A joined body obtained by joining two or more composite materials containing carbon fibers and a thermoplastic
resin by Joule heat at the same time when or in a state in which vibration is applied in a state in which the joining
surfaces of the two or more composite materials are in contact.

**19.** A joined body according to claim 18, wherein
the vibration is vibration in a direction perpendicular to the joining surfaces of the composite material.

**20.** A joined body according to claim 18 or 19, wherein
a frequency of the vibration is several kHz to several 100 kHz.

**21.** A joined body according to any one of claims 18 to 20, wherein
an average fiber length of the carbon fibers is 1 to 100 mm.

**22.** A joined body according to any one of claims 18 to 21, wherein
a content of the carbon fibers in the composite material is 10 to 90% in volume percent (Vf).

## FIG. 1

## FIG. 2

# FIG. 3

*FIG. 4*

START

S1 — BRING JOINING SURFACES OF TWO COMPOSITE MATERIALS INTO CONTACT

S2 — PRESS TARGET JOINING POSITION OF TWO COMPOSITE MATERIALS

S3 — HAS CERTAIN PERIOD OF TIME T1 ELAPSED?
NO
YES

S4 — APPLY VIBRATION TO TWO COMPOSITE MATERIALS IN PRESSING STATE

S5 — HAS CERTAIN PERIOD OF TIME T2 ELAPSED?
NO
YES

S6 — FEED ELECTRIC CURRENT TO TARGET JOINING POSITION

S7 — HAS PREDETERMINED PERIOD OF TIME T3 ELAPSED?
NO
YES

S8 — STOP APPLICATION OF VIBRATION AND CURRENT FEEDING

S9 — HAS PREDETERMINED PERIOD OF TIME T4 ELAPSED?
NO
YES

S10 — STOP PRESSING

END

24

# FIG. 5

# FIG. 6

## FIG. 7

## FIG. 8

# FIG. 9

START

BRING JOINING SURFACES OF TWO COMPOSITE MATERIALS INTO CONTACT — S1

PRESS TARGET JOINING POSITION OF TWO COMPOSITE MATERIALS WITH PREDETERMINED PRESSURE P1 — S2

APPLY VIBRATION TO TARGET JOINING POSITION OF TWO COMPOSITE MATERIALS — S3

FEED ELECTRIC CURRENT TO TARGET JOINING POSITION OF TWO COMPOSITE MATERIALS — S4

S5 — MELTED AND BROUGHT INTO WELDED STATE? — NO

YES

S6 — SWITCH PRESSING TO PRESSURE P2 SMALLER THAN PREDETERMINED PRESSURE P1

S7 — HAS PREDETERMINED PERIOD OF TIME ELAPSED? — NO

YES — S8

STOP APPLICATION OF VIBRATION AND CURRENT FEEDING AND THEN, STOP PRESSING

END

# *FIG. 10*

JOINING AREA [mm²]

# FIG. 11

# FIG. 12

# FIG. 13

START

↓

BRING JOINING SURFACES OF TWO COMPOSITE MATERIALS INTO CONTACT — S1

↓

PRESS TARGET JOINING POSITION OF TWO COMPOSITE MATERIALS WITH PREDETERMINED PRESSURE P1 — S2

↓

FEED ELECTRIC CURRENT TO TARGET JOINING POSITION OF TWO COMPOSITE MATERIALS — S3

↓

S4 — BROUGHT INTO WELDED STATE? — NO

YES ↓

S5 — SWITCH PRESSING TO PRESSURE P2 SMALLER THAN PREDETERMINED PRESSURE P1

↓

S6 — HAS PREDETERMINED PERIOD OF TIME ELAPSED? — NO

YES ↓

STOP CURRENT FEEDING AND THEN, STOP PRESSING — S7

↓

END

# FIG. 14

# FIG. 15

# FIG. 16

# FIG. 17

## FIG. 18A

## FIG. 18B

## FIG. 19

# FIG. 20A

# FIG. 20B

## FIG. 21

## FIG. 22

# FIG. 23

```
                    ┌─────┐
                    │ STA │
                    │ RT  │
                    └─────┘
                       │
                       ▼
        ┌───────────────────────────────┐
        │  BRING JOINING SURFACES OF TWO │ ─── S1
        │   COMPOSITE MATERIALS INTO     │
        │           CONTACT              │
        └───────────────────────────────┘
                       │
                       ▼
        ┌───────────────────────────────┐
        │      PRESS TARGET JOINING      │ ─── S2
        │   POSITION OF TWO COMPOSITE    │
        │  MATERIALS WITH PREDETERMINED  │
        │            PRESSURE            │
        └───────────────────────────────┘
                       │
                       ▼
        ┌───────────────────────────────┐
        │     APPLY VIBRATION TO TARGET  │ ─── S3
        │     JOINING POSITION OF TWO    │
        │       COMPOSITE MATERIALS      │
        └───────────────────────────────┘
                       │
                       ▼
        ┌───────────────────────────────┐
        │ FEED ELECTRIC CURRENT TO TARGET│ ─── S4
        │     JOINING POSITION OF TWO    │
        │       COMPOSITE MATERIALS      │
        └───────────────────────────────┘
                       │
                       ▼
        ┌───────────────────────────────┐
        │  START THERMOGRAPHY DEVICE AND │ ─── S5
        │       OBSERVE JOINED STATE     │
        └───────────────────────────────┘
                       │
                       ▼
        ┌───────────────────────────────┐
        │    COMPARE DATA RELATING TO    │ ─── S6
        │     TEMPERATURE DISTRIBUTION   │
        │ OBTAINED BY THERMOGRAPHY DEVICE│
        │ WITH TEMPERATURE DATA SERVING AS│
        │           REFERENCE            │
        └───────────────────────────────┘
                       │
                       ▼
        ┌───────────────────────────────┐
        │   DETERMINE ACCEPTABILITY OF   │ ─── S7
        │          JOINING SPOT          │
        └───────────────────────────────┘
                       │
                       ▼
                    ┌─────┐
                    │ END │
                    └─────┘
```

# FIG. 24A

11a   21   19   11b

11c

# FIG. 24B

11a   21   19   11b

11c   21

## INTERNATIONAL SEARCH REPORT

| International application No. |
| --- |
| PCT/JP2014/058079 |

**A. CLASSIFICATION OF SUBJECT MATTER**
*B29C65/34*(2006.01)i, *B29C65/08*(2006.01)i

According to International Patent Classification (IPC) or to both national classification and IPC

**B. FIELDS SEARCHED**

Minimum documentation searched (classification system followed by classification symbols)
B29C65/00-65/82

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-187903 A (Tokyo Institute of Technology), 04 October 2012 (04.10.2012), entire text; all drawings (Family: none) | 1-22 |
| A | JP 2009-073132 A (Toyota Motor Corp.), 09 April 2009 (09.04.2009), entire text; all drawings & US 2010/0212823 A1 & EP 2196303 A1 & WO 2009/041315 A1 & CN 101868343 A & AT 543632 T | 1-22 |
| A | JP 10-252973 A (Osaka Gas Co., Ltd.), 22 September 1998 (22.09.1998), entire text; all drawings (Family: none) | 1-22 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17 June, 2014 (17.06.14) | 24 June, 2014 (24.06.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012187903 A

- WO 2012137985 A